# EUROPEAN PATENT SPECIFICATION

(11) **EP 0 394 600 B1**
(45) Date of publication and mention of the grant of the patent: **22.03.1995**
(21) Application number: 89500113.9
(22) Date of filing: 16.11.1989
(51) Int. Cl.: H04M 17/02

(54) **Outdoor modular public telephone**
Öffentliches modulares Aussentelefon
Téléphone public modulaire pour l'extérieur

(30) Priority: 28.04.1989 ES 8901506
(43) Date of publication of application: 31.10.1990
(73) Proprietor: TELEFONICA DE ESPANA, S.A., 28013 Madrid (ES)
(72) Inventor: Ibanez Palomeque, Francisco, E-28050 Madrid (ES); Garcia Morales, José Manuel, E-28002 Madrid (ES)
(74) Representative: Carpintero Lopez, Francisco

(56) References cited:
- EP-A- 0 251 238
- WO-A-80/01126
- CH-A- 538 162
- FR-A- 2 217 879
- FR-A- 2 558 325
- GB-A- 2 079 846
- US-A- 3 142 522
- US-A- 3 393 273
- REVIEW OF THE ELECTRICAL COMMUNICATIONS LABORATORIES vol. 35, no. 6,1987, TOKYO,JP; pages 671 - 679; KAIHARA ET AL: 'NEW CARD / COIN TELEPHONES'

## Description

### OBJECT OF THE INVENTION

The present invention relates to a public telephone, of the type that is to be fitted in telephone booths and the like, i.e., in places with no direct personal control over the same and hence with a high risk for criminal action tending to steal its takings.

The structural characteristics of the telephone set forth herein make it almost impossible for such criminal action to be successful and they moreover enable the same to endure undue use, even really bad treatment in acts of vandalism, with no serious risk of damage to its components and with no functional loss.

The telephone at issue can be used with coins and/or credit cards, since its modular structure allows it to be optionally equipped with the mechanisms for either type of payment, without this entailing any modification to its basic structure.

Another object hereof is to set up a control over collection so that the worker carrying this out has no direct access to the coins.

### BACKGROUND OF THE INVENTION

It is a well-known fact that public telephones, especially telephones fitted in outdoor booths, have for a long time attracted criminals, and this type of telephones have therefore increasingly used more resistant frameworks, more robust keypads and the general aim has been to make all the elements of the set increasingly inviolable.

However, the solutions taken in this respect are not "flexible", for they result in sets made in one piece that cannot be modified, and therefore each specific application for a given type of telephone implies an embodiment differing substantially from the rest, almost throughout the whole manufacturing process.

However, practice at times requires telephones that may work only with coins, only with a credit card or work optionally with either payment system, and a telephone would therefore be required adjusting, from an invariable basic structure, to any of these requirements.

It would likewise be desireable to obtain fast and simple assembling, despite the remarkable robustness required by this type of public telephones and however conventional telephones of this type require a complex assembling.

Another problem in this type of telephones lies in the existence therein of some weak points making them vulnerable, for instance the liquid glass screen on which information is displayed for the user, or the outlet channeling for surplus or faulty coins.

Another problem in public telephones is the impossibility of efficiently controlling collection, and the latter therefore depends on the honesty of the collectors, for although electronic accounting means for coins entering the set are available, the theoretic figure may frequently not coincide with the real number, because of faults in the set or different tricks employed by some users, which does not allow the absence of some coins to be flatly established as being due to theft by the operator or collector.

The number and spread of credit cards has grown considerably in recent years, and these have indeed been used in telephones either as usual credit cards or as phonecards used for this purposes only. In this respect, noteworthy is the "Review of Electrical communications Laboratories", vol. 35, no. 6, 1987, Tokyo, JP, pages 671-679, M.Kaihara, which shows compact public telephones accepting coin or magnetic card payment. These telephones are powered from the mains which means that the card operating service is discontinued when there is a power cut, the magnetic card reader being motorised to allow writing/reading and punching of the cards. The telephone set is not modular and a circuit breakdown therefore entails the total dismantling and manipulation of the appliance.

### DESCRIPTION OF THE INVENTION

The public telephone set forth by the invention fully solves the above problems, such telephone being provided with a modular structure, allowing given components to be used or cancelled as appropriate, and this with a rational assembly that is fast and simple, the telephone being at the same time on the whole extremely robust, almost inviolable and having no weak points, and attention being moreover directed to the fact that collection is wholly and automatically controlled.

More specifically and in order to achieve the above, the public telephone subject hereof basically comprises two bodies, a top body fitted with the different operative mechanisms thereof and a lower body acting as a coin-collecting chest, both bodies being physically independent and attachable to each other by any means, so that the lower body need not be provided, specifically when the public telephone is designed only to be used with credit cards.

Both the top body and the lower body are provided with two doors that wholly affect their front surface and are in turn fitted with safety locking means.

The door of the top body, shaped as a rectangular pan with a backwardly pointing cavity, is provided with a plurality of windows for coupling of corresponding modules, specifically two top windows, adjacent on their sides, one for coupling of the card insertion module and another one for coupling of the coin insertion module. Under the same, and vertically in line, is a window for positioning of the module corresponding to the data display screen, just under the same another module for positioning of the module constituting the keypad and below these another module for positioning of the coin return module, whilst another vertically elongate module is located on the side of the latter three windows, for coupling of the module for hanging the handset.

This structure is moreover provided with a series of lids that can couple to some of these windows, specifically to substitute the card insertion module, the coin insertion module and the coin return module, and even to substitute the data display module in a practical embodiment where such screen is deemed unnecessary.

At the lower part of the top body and just under the coin insertion module, is a conventional money collector, the former having a tilting lever that can be driven by an external push-button for the usual and necessary action on the coin selector, so as to manage to clear coins that can possibly get stuck therein.

Under the coin selector is a store admitting a considerable number of coins and that, duly controlled by a telephone microprocessor, allows such coins to be gradually and suitably used up, as the telephone conversation goes on, returning any surplus coins when the conversation ends, this taking place through the corresponding module located under the keyboard, all these elements, i.e., the coin insertion module, coin selector, coin store and coin return module obviously being eliminated in practical embodiments where the telephone is to be used solely with credit cards.

The data display module is specially characterized in that the front of the corresponding liquid glass screen is protected with a simple or multiple glass, being of sufficient thickness to withstand very powerful blows.

As to the keyboard, it is in turn essentially characterized in that the special key assembling system on the corresponding support, specifically a bayonet system rendering such assembly extremely quick and simple, the keys being fixed in position after assembly because of their prismatico-polygonal shape, preferably prismatico-quadrangular, and when subsequently fixed in position with the assistance of a lid common to all of them, provided with windows that formally, dimensionally and positionally coincide with such keys.

Both the data display module and the keyboard module are provided with large rear threaded bolts traversing bores on the bottom of a sort of pan positioned inside the top body and the mouth of which specifically adapts to the internal surface of the door, pressing against this latter when the nuts assisting the said bolts are tightened and consequently housing the said two modules.

The coin return module, which is obviously fed by their store, is shaped as a sort of tray open at the front, provided with a likewise front hatchway, tilting backwardly and upwardly, with the particularity that the bottom of the said tray, the wall of which is upwardly and backwardly inclined, is provided with an oblique partition which the free edge of the front hatchway in turn falls on when it tilts, so that when the tray is opened for access to the coins located therewithin, the actual hatchway closes the top mouth of the tray falling on the said oblique partition.

All these modules, specifically as regards their front surface, are manufactured with an extremely tough material, attention being further directed to the solution adopted to provide the tilting elements with hinged connections, pursuant to which solution the ends of the tilting shafts of such elements fit into housings of the connections that receive the same and are definitively fixed by simply joining such elements to other complementary elements, that close the mouths of such housings.

The cable relating the mechanisms of the actual telephone and the handset is obviously duly shielded, the side of the top body being provided with the outlet for such cable, specifically through a mechanism allowing some tilting, approximately 90°, and therefore the said cable can be pointed in the most suitable manner without damaging the same.

The safety closures, for the door of the top body, and for the door of the lower body alike, comprise many bolts and are in both cases opened through a suitable lock provided on the side wall of the body, or else from the distance, from the actual telephone exchange and at the request of the operator in the booth. Attention should be directed to the existence in the lock mechanism of a lower body, of a driving arm that, on releasing the group of bolts, acts on the door causing the same to start opening, which is extremely interesting bearing in mind that the same lacks manual holding means and that its weight, because of its robustness, is considerable.

Finally, and in accordance with another characteristic of the invention, the coins inserted in the telephone do not fall directly into the said lower body, but do so into a moneybox established therein, which moneybox is characterized in having a sealable lid fitted with a mechanism that, when the said moneybox is housed inside the lower body, defines an opening for passage of coins into the moneybox, as they fall from the corresponding coin store located in the top body and through openings operatively facing the two bodies, whereas when the said moneybox is withdrawn and by the simple action to withdraw the same, the entrance slot thereto is closed with the said mechanism and the moneybox is rendered wholly inaccessible, making it therefore necessary to break the lid's seal for access to the coins contained inside the same.

### DESCRIPTION OF THE DRAWINGS

In order to complement the description being made, and to assist a better understanding of the characteristics of the invention, a set of drawings is attached to the present specification, as an integral part thereof, where the following has been shown in an illustrative and non-limiting manner:

Figure 1.- Is a front elevation view of a public telephone in accordance with the object hereof and in accordance with the fullest operative sphere therefor, i.e., with a practical embodiment where the telephone may be used with coins and credit cards alike.

Figures 2, 3, 4 and 5.- Are respective views of the part constituting the door to the top body, figure 2 specifically showing the several windows receiving the corresponding modules forming the telephone.

Figure 6.- Is a side elevation and cross-sectional view of the same telephone, diagrammatically showing the different operative modules that can take part therein.

Figure 7.- Is a side elevation detail of the coin insertion module.

Figure 8.- Is a plan view of the same module.

Figure 9.- Is a rear elevation view.

Figure 10.- Is a sectional level detail of the push-button of the said module and following line A-B of figure 9.

Figure 11.- Is a rear elevation view of the data display module.

Figure 12.- Is a cross section thereof following line C-D of the previous figure.

Figure 13.- Is a side elevation detail of the assembly of the display module and the keypad module on the door of the top body.

Figure 14.- Is a sectional profile of the keypad module, level with a vertical row of keys and following line E-F of figure 16.

Figure 15.- Is a front elevation view of the keypad.

Figure 16.- Is a rear elevation view of the full keypad module.

Figures 17, 18 and 19.- Are, respectively, a front elevation and two profiles of the keys support element.

Figure 20.- Is a lower plan, an elevation and a top plan view of one of the said keys.

Figure 21.- Is a sectional detail of the support of figure 17, following line G-H of the same figure.

Figure 22.- Is the same sectional detail of figure 21 but complemented with the rest of the elements participating in the keypad.

Figure 23.- Is a plan view of the metal framework on which the support of figure 17 is assembled.

Figure 24.- Is a profile detail of the framework of figure 23.

Figure 25.- Is a perspective view of the coin return module.

Figure 26.- Is a plan view thereof.

Figure 27.- Is an elevation and sectional view following line I-J of figure 26.

Figures 28, 29 and 30.- Are a rear elevation view and two elevation views of a closure lid for the coin return module window, when such module is unnecessary.

Figure 31.- Is a front elevation of the module for hanging the handset.

Figure 32.- Is a sectional profile of the same module, following line K-L of figure 31.

Figure 33.- Is a rear elevation view of the same module.

Figure 34.- Is an enlarged detail of the module of figure 31, level with the balance acting on the corresponding switch.

Figure 35.- Is a rear elevation of the same detail of the previous figure.

Figure 36.- Is a sectional profile of the same detail, following line M-N of the said figure.

Figure 37.- Is another and again front elevation detail of the hanging module, in this case level with the push button for recalling.

Figure 38.- Is a rear elevation of the same detail of the previous figure.

Figure 39.- Is a sectional profile of the same detail following line O-P of figure 38.

Figure 40.- Is a side elevation detail of the closure mechanism for the top body door.

Figure 41.- Is a front elevation detail of the outlet mechanism for the shielded cable connecting the top body and the handset.

Figure 42.- Is a section of the same mechanism following line R-S of the previous figure.

Figure 43.- Is a side elevation view of the closure mechanism for the door of the lower body or chest.

Figure 44.- Is a plan view of the lid of the moneybox housed in the said chest, with its corresponding blocking mechanism.

Figure 45.- Is a cross-sectional detail of the said lid, following line T-U of figure 44.

Figures 46, 47 and 48.- Are, finally, the mechanism of figure 44, in consecutive operative stages corresponding to the operations for placing and withdrawing the moneybox from inside the chest.

### PREFERRED EMBODIMENT OF THE INVENTION

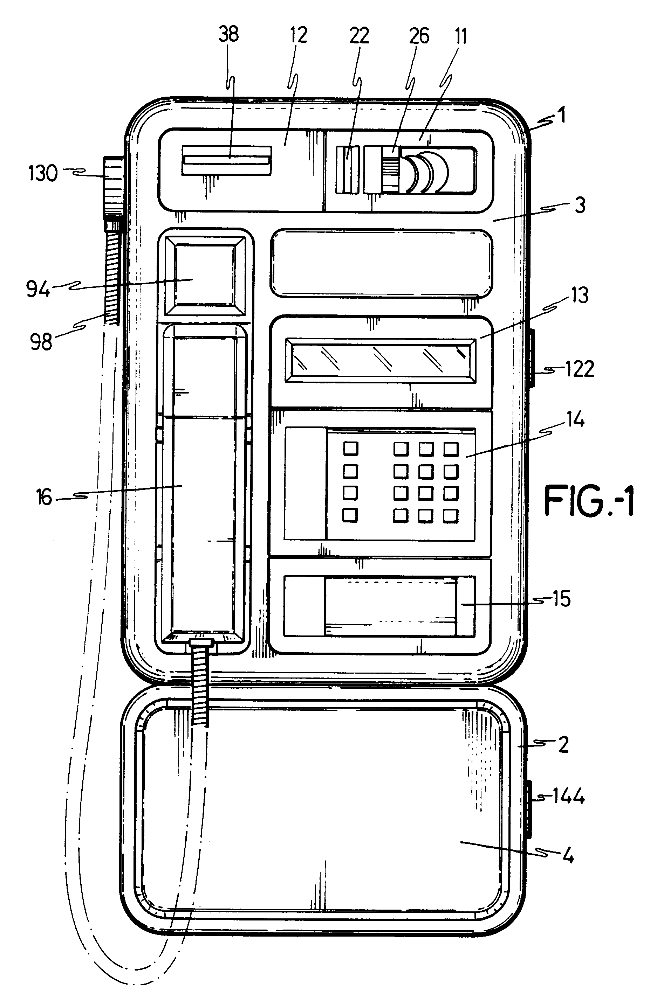

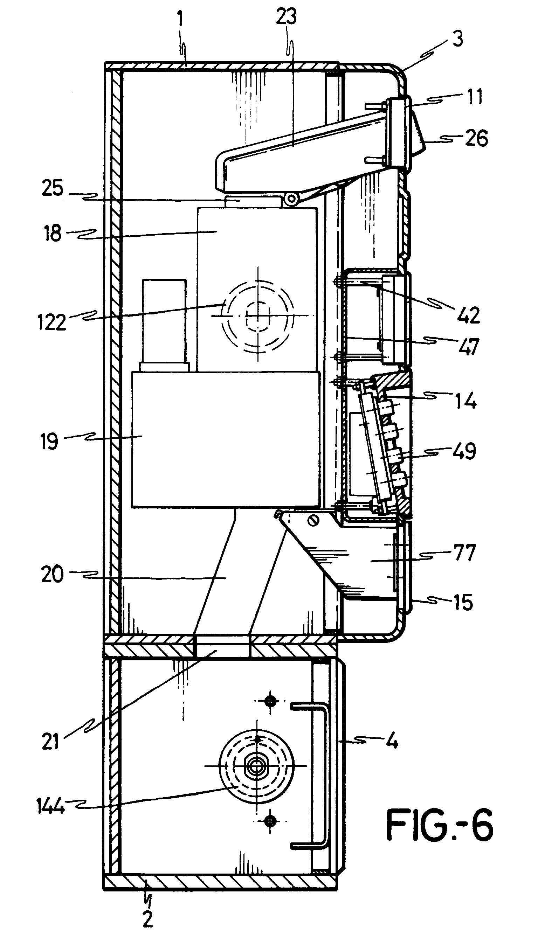

In the light of these figures and more specifically figures 1 and 6, it may be observed that the public telephone hereof comprises two physically independent bodies 1 and 2, that may be superposed and attached by any conventional means, body 1 being designed to house the operative mechanisms of the telephone, and body 2 forming a chest to gradually receive the collection thereof and that need not therefore be provided when such telephone is to be used solely with credit cards. The front part of the body 1 is provided with the corresponding door 3, basically shaped as a prismatico-rectangular pan, with a rear cavity, and taking up the whole front of body 1, whereas body 2 is in turn provided with a front door 4 also independent of the previous door.

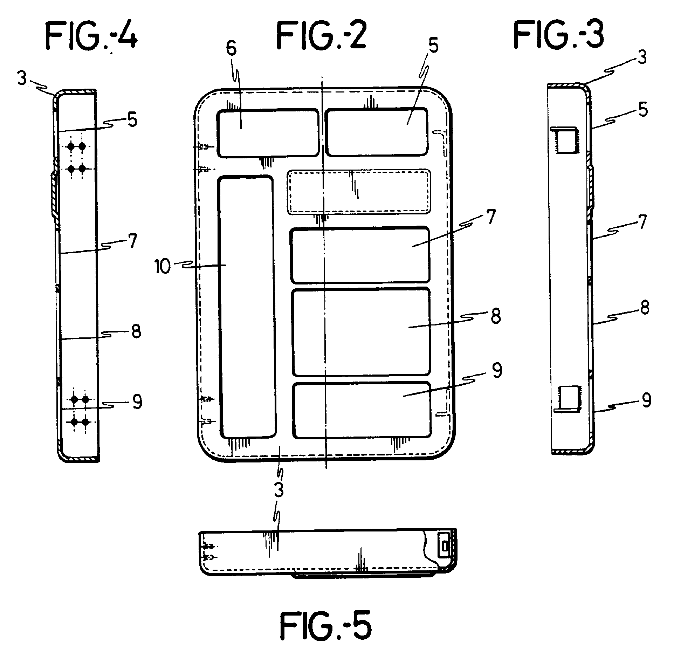

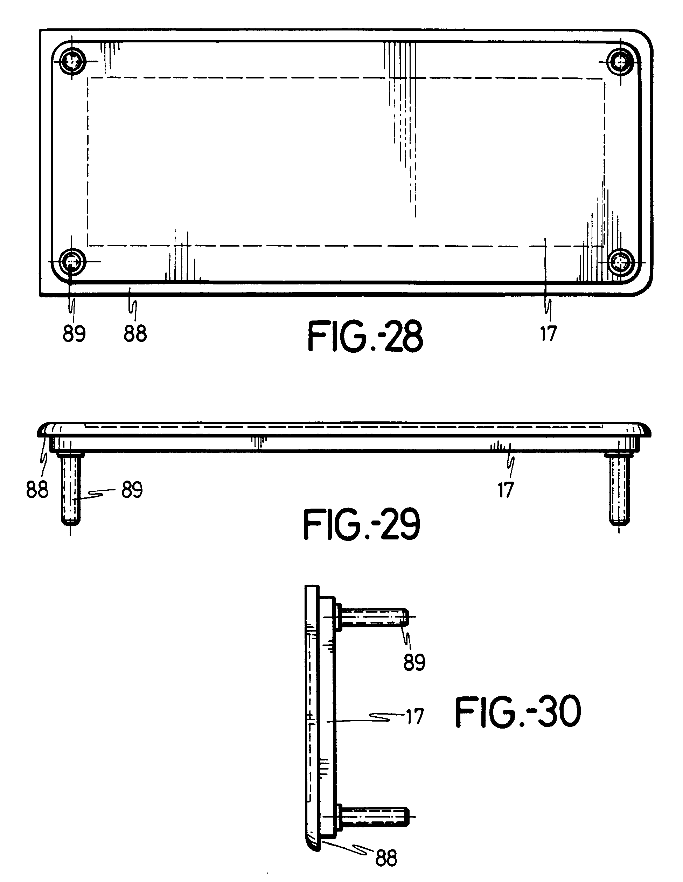

The top door 3 is provided with a plurality of windows 5, 6, 7, 8, 9 and 10, as specifically shown in figure 2, such windows being designed to house respective modules, specifically the coin insertion module 11, the card insertion module 12, the data display module 13, the keypad module 14, the coin return module 15 and the module for hanging the handset 16 depending on whether any one of such modules is not provided, for instance the module 12 when the telephone is to be solely used with coins, or the modules 11 and 15 when use is solely provided for cards, which modules may be replaced by corresponding lids, such as lid number 17 shown in detail in figures 28 through 30.

Moreover and as shown also in figure 6, inside body 1 and under the coin insertion module 11 is a coin selector 18, of any conventional type, under the latter a store 19 where the telephone stores the coins inserted and from where they gradually fall, through channeling 20, to the body 2 as the telephone conversation goes on and for which purpose bodies 1 and 2 are provided with bores 21 that face each other and face channeling 20, whereas when the conversation ends the surplus coins in the store 19 move to the coin return module 15 in turn located under the said store 19.

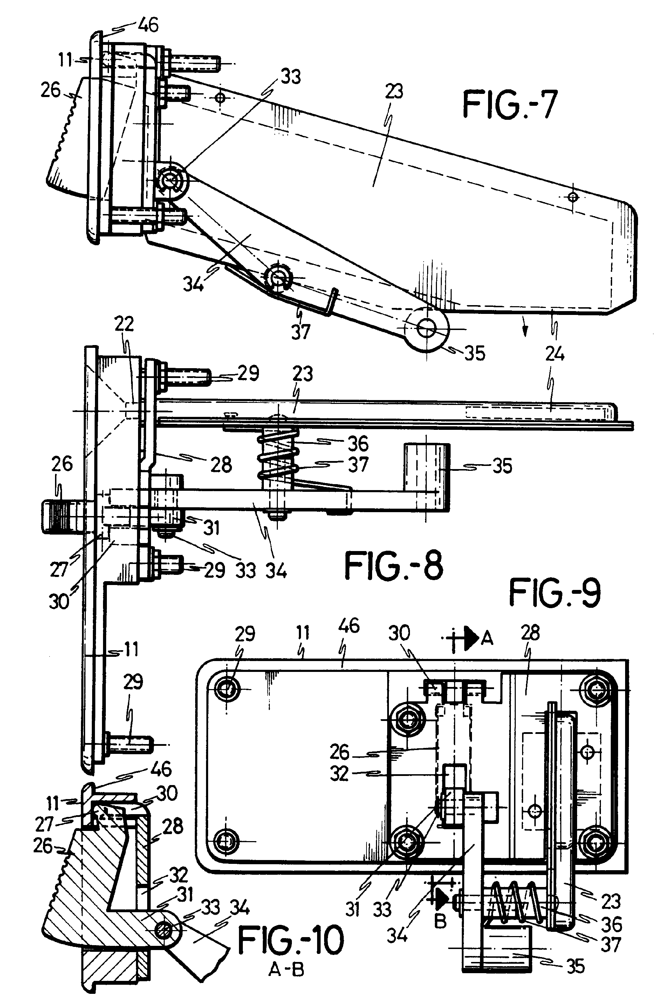

The coin insertion module 11 comprises a plate, provided with a slot 22 for coin insertion, its mouth being considerably expanded to facilitate this operation, the slot 22 leading into a channeling 23 flattened on the side and that defines a rearward and downward inclined slope down which the coins roll after being inserted toward the outlet mouth 24 at the end of the said slope, located at the internal end of the channeling 23, as shown in figures 7 and 8, and operatively facing the mouth 25 of the coin selector 18, figure 6.

It is a well-known fact that conventional coin selectors are provided with a tilting side partition for release of coins that might get stuck inside the same. Now then, in order to operate this tilting partition, the coin insertion module 11 is further provided with a push-button 26, also positioned on its front plate, over which it is tiltingly assembled, and the top of the said push-button is therefore provided with a "tilde" like transversal expansion 27, defining two cylindrical and diametrically opposed pivots housed in a rear boxed-in part of the actual module 11, as specifically shown in the detail of figure 10, and where they are kept by a rear lid 28, fixed to the plate of the coin insertion module 11 by means of screws 29 projecting at the back of the latter and provided with bent strips 30 to act on the ends of the transversal expansion 27, as may in turn be observed in figure 8, such rear lid 28 being the real support to which the flat coin channeling 23 is fixed.

The push-button 26 and going against its tilting shaft 27, is provided with a backwardly pointing arm 31 traversing a window 32 of the lid 28 and the free end of which and through rod 33 is hingedly connected to tilting lever 34, the free end of which is in turn capped by a ram 35 that acts on the known side tilting arm of the mobile partition of the coin selector, such lever 34 being in turn tiltingly assembled through its middle area, specifically on a shaft 36 being integral with a flat channeling 23 and on which a spring 37 is coaxially assembled against which the lever 34 tilts when acted on by the front push-button 26.

As to the card insertion module 12, its front plate is provided with a slot 38 that operatively faces a card reader of any conventional type fixed to the rear plate surface, provided with screws similar to those of the module (11) plate, that project as a single piece from the rear surface thereof, to fix these modules to door 3, with the assistance of corresponding nuts.

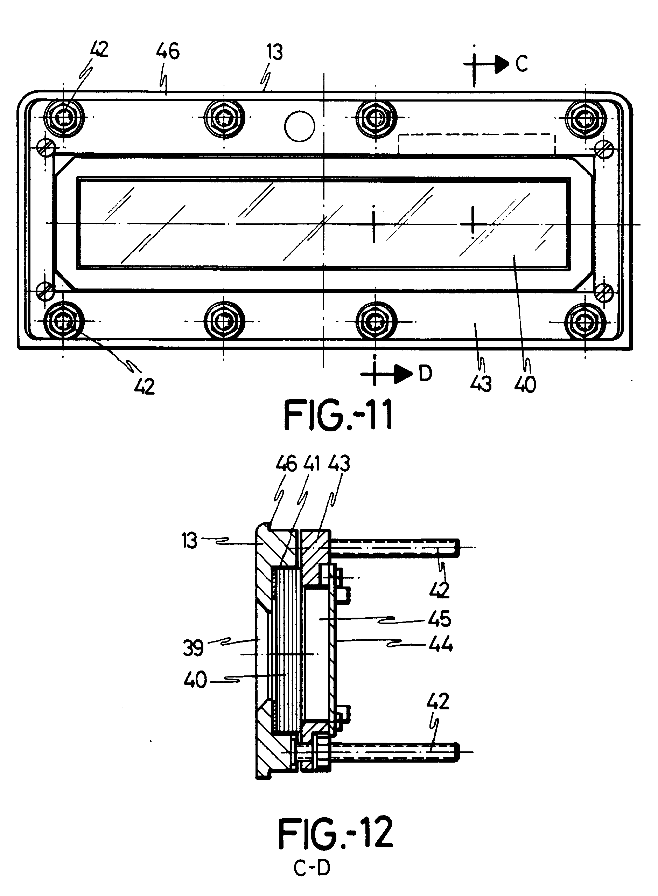

As to the display module 13, it comprises a rectangular metal and highly resistant frame, defining a window 39 that allows a liquid glass screen, of a conventional sort, to be seen through a multilayer glass 40, that also affords top guarantees as to mechanical resistance. More specifically, and as shown in figure 12, the metal frame of display module 13 has an internal perimetral stepping, on which a flat rubber frame 41 is placed to support the glass 40 and from the rear and perimetral part of which threaded bolts 42 project to fix the same to the door 3 of the top body 1 of the telephone, which threaded bolts simultaneously serve to fix a rear and preferably plastic frame 43, that acts as a holding means for the glass 40 and as a physical support for the printed circuit plate 44 of the liquid glass screen 45 located just behind the protecting glass 40.

The display module 13, as the keyboard module 14, that we shall refer to hereinafter, is fixed to the door 3 of the top body 1 of the telephone, after being inserted through the relevant windows 7 and 8, up to the limiting penetration position defined by its external perimetral stepping 46, with the assistance of a pan 47 coupled to the internal door surface, with its cavity pointing toward the front and its bottom crossed by threaded bolts 42 which shall receive the corresponding nuts 48 behind the pan 47.

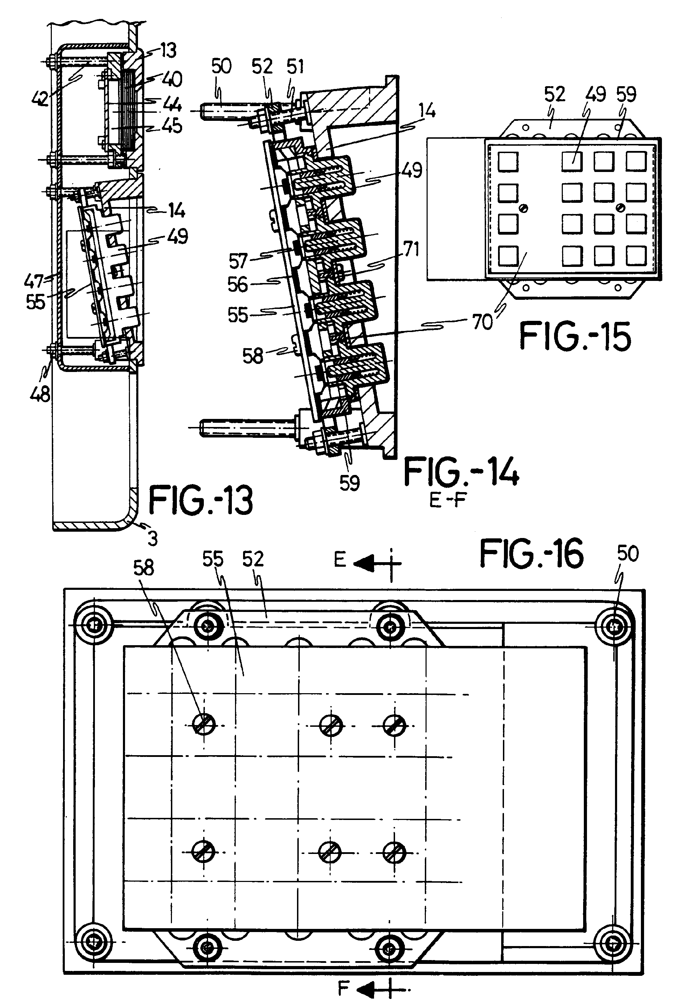

The keyboard module 14 similarly comprises a front metallic and highly resistant plate, that forms a sort of pan with a rear and upwardly inclined bottom, as specifically shown in figure 14, and the bottom of which is provided with the necessary windows for the different keyboard keys 49.

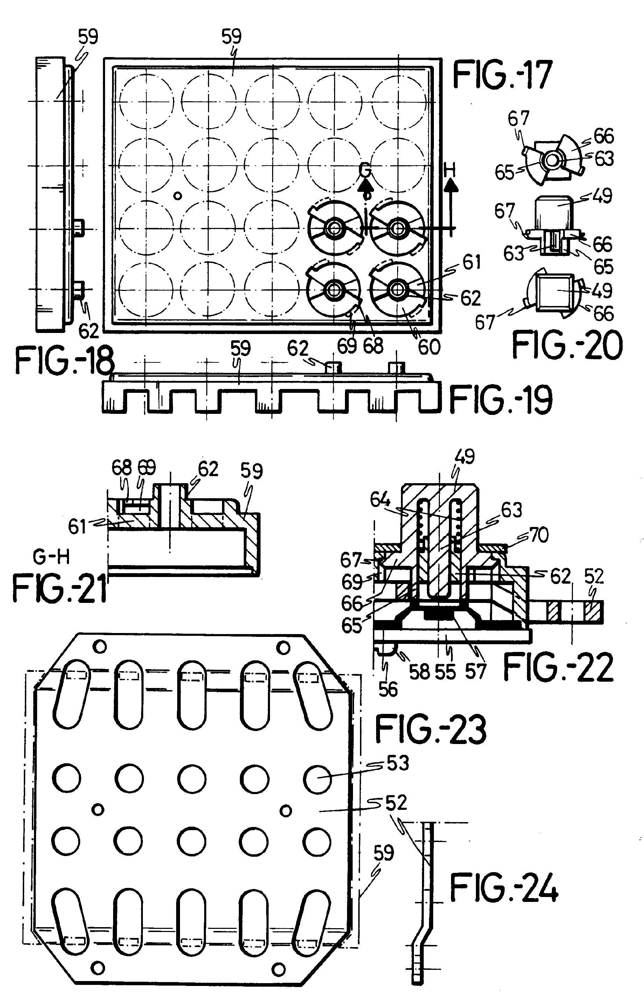

More specifically, the plate of keyboard module 14, in addition to the threaded bolts 50 similar to the threaded bolts 42 of the data display module and having the same aim to fix the keyboard module as a whole to the pan 47, is provided with four more threaded bolts 51 on its back so as to fix a metal framework 52, shown in detail in figures 23 and 24, such metal framework being provided with openings 53 in correspondence with the different keys 49, that is inserted between the electro-insulating support 59 and the printed circuit plate 55. The front surface of this plate has an elastic membrane 56 with conducting rubber sectors 57, facing keys 49 and through which the marker circuits are closed when the said keys are pressed. All these parts are assembled with coach screws 58 fixed to the electro-insulating support 59, in turn shown in detail in figures 17 to 21, which support is provided with a plurality of housings 60, for each key, comprising cylindrical openings, with two diametral and opposed arms 61 to hold a small central cylindrical bushing 62 acting as guidance for an axial rod 63 of the relevant key, whilst a spring 64 rests on the front of the said bushing 62 and is housed inside the cavity of the key 49 and tends to drive the latter outwards, i.e., the key is operated against the said spring.

For its part each key 49 has a polygonal prismatic body, as shown in detail in figure 20, that is hollow, closed at the front and from which besides the aforesaid axial rod 63, a cylindrical neck 65, surrounding the bushing 62 and having two large windows or side openings, clearly shown in the elevation view of figure 20, projects. At the connection between the prismatic body and the cylindrical neck of the key, the latter has two side flat and counter-opposed flat expansions 66, shaped as a circular trapezium and with an amplitude of 90°, each being further provided with a radial protuberance 67 so that both protuberances are located in diametrical opposition, just like the slight radial slots 68 of the housing 60 of the support 59 that allow the corresponding keys to be positioned for definitively fixing them, by means of simple rotation and through a bayonet system, after axially pressing on the keys 49 against the spring 64, when facing the side protuberances 67 and the slots 68, and a subsequent partial rotation along internal recesses 69 into which the said slots 68 project and that are clearly shown in figure 17.

In order to fix the keys 49 on their support 59, after being assembled, arrangement of a plate or complementary lid 70 has been foreseen, such plate having polygonal openings that numerically, formally and positionally coincide with the keys 49, that is also fixed by means of screws 71 to the support 59 and that consequently fixes the keys in position in a gyratory manner, preventing the latter from becoming detached because of the actual bayonet type assembling system thereof.

The windows of this lid 70 obviously also formally, dimensionally and positionally coincide with the windows of the front plate of the keyboard module 14, through which the keys 49 project outwardly, but attention should be directed to the fact that whilst support 59 has a maximum number of housings 60 for respective keys 49 and the lid 70 must have the same windows as the front plate of the keyboard module 14, that is to say, the external and visible plate constituting the protective element for this module, may have the same or a smaller number of windows, in accordance with the number of keys foreseen for the telephone in each case, and more specifically in accordance with the performance foreseen for the said telephone.

As to the coin return module 15, it also comprises a front frame and that has the same external and rear perimetral stepping 73 for adaptation to the window 9 of the door 3 of the top body 1, such frame defining a large window 74 that is normally blocked by a door 75 that tilts at its top edge.

Screwed to the rear surface of the frame of the coin return module 15 and fixed with the assistance of two side lugs 76, is a body 77 forming a container or pan with a straight trapezial and inverted profile, open both at the top and at the front area, where the said window 74 is located.

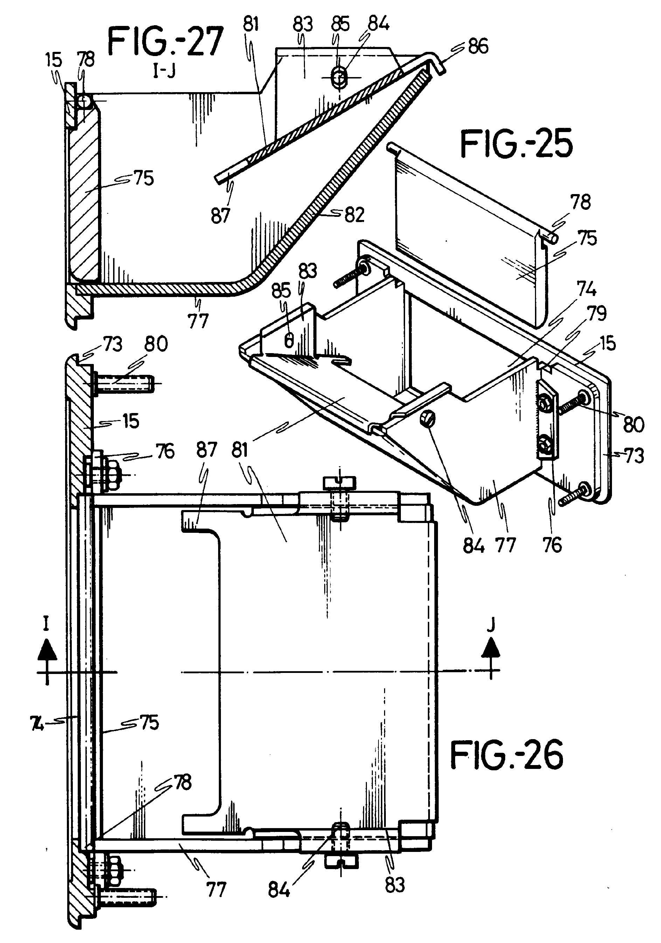

Attention should moreover be directed to the fact that the part 75 constituting the door for access into such container, projects through the ends of its top edge into two cylindrical protuberances 78 constituting its tilting shaft, that rest on steppings 79 operatively provided on the front-top apices of the side walls of the body 77 defining the pan and that are clearly visible in figure 25, said door 75 being fixed in position in the withdrawal direction, by the actual overall assembly on the window 9 of the front door 3, since the edge of such window 9 closes the aforesaid steppings 79, where protuberances 78 are housed.

In order to fix the module to the door 3 and as in previous cases, two threaded rods 80 are provided on the back surface of the said frame of coin return module 15 and near its apices.

Attention should moreover be directed, in connection with this coin return module, to the fact that a plate 81 is provided inside the same above the rear and sloped wall 82 of the said container, also arranged slanted but much less so, as shown in figure 27, the plate 81 having two side wings 83 bending upwards firstly and then outwards, to fix the same to body 77, specifically with the assistance of screws 84 that play in wide holes 85 of the actual wings 83 and that afford some movement to the plate 81, the rear-top edge 86 of which is bent downwards in order to be lapped to the rear-top edge of the wall 82 of the body 77, whilst its front-lower edge is provided with a very wide and barely deep channeling 87 which the lower edge of the door 75 abuts on when the latter is tilted backwards to be opened.

Thus and as also shown in figure 27, the coins fall on the plate 81 that remains at quite some distance from the door 75 and they therefore reach the bottom of the container defined by body 77, and to reach the same it is necessary to tilt the door 75 backwards, and therefore when the door is in this position of front opening, it fully prevents, with the assistance of the plate 81, access to the inside of the telephone. Furthermore, the slight mobility of the plate 81, through the wide holes 85, allows the said plate 81 to be struck slightly in the event of the coins getting stuck.

As aforesaid, when the telephone is to be used solely with credit cards, this coin return module will not be provided and the window 9 will be blocked with a lid 17, shown in figures 28 to 30, that comprises a rectangular plate formally and dimensionally coinciding with the window 9, having an internal perimetral stepping 88 for adaptation to the window mouth, and threaded rods 89, projecting from its rear surface and destined to definitively fix it to the door 3 of the top body 1 of the telephone, as in previous cases.

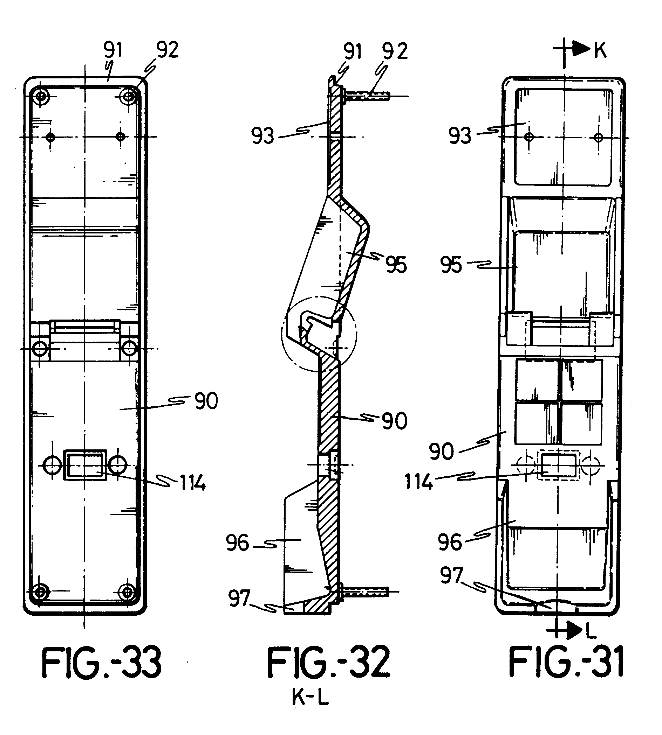

Finally, the window 10 of the front door 3 of the top body 1 of the telephone is to receive the module 90 for hanging the handset 16, which module is clearly shown in figures 31 to 36. This module comprises a rectangular plate, with the same perimetral stepping 91 as the aforesaid modules, for coupling to the mouth of the window 10 and with the same fixing screws 92.

This plate of module 90 has an end and top sector 93 for an embellisher 94 to be fixed with screws, and just below the same a recess 95 formally and dimensionally suited to receive the handset earpiece 16, whilst its lower end area has a front extension 96 defining a box for the opposite end of the said handset 16, viz. the mouthpiece, and with a slot 97 for outlet of the cable 98.

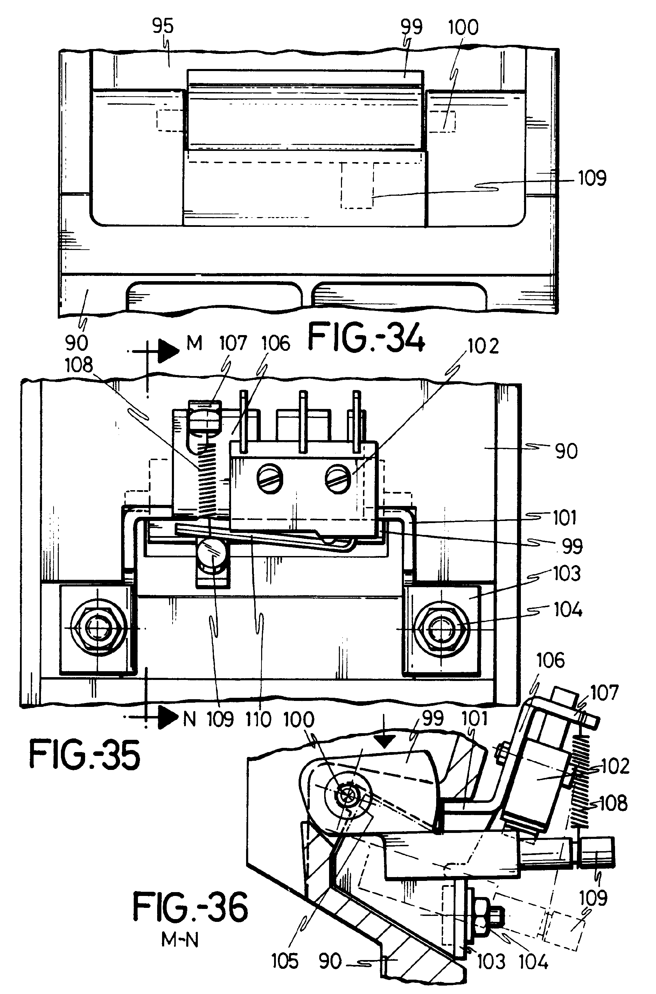

The lower end of the recess 95 defines a large stepping and therein a window with a small balance 99 wholly blocking the said window and manufactured with the same highly resistant metal material as the plate of module 90 of the latter and the other modules. The said balance has two small cylindrical and side extensions 100, that constitute its balance shaft, housed in rear slots of the actual plate of module 90 and that are held in an assembly position by the actual support 101 for the micro-breaker 102 that is the actual hanging sensor element, which support 101 comprises a basically "U" shaped plate, with its side branches provided with end lugs 103 through which it is fixed to plate of module 90, by means of nuts 104 coupled to threaded rods projecting from the said plate, which side branches and through their front-top apices 105 close the housing slots for extensions 100, as specifically shown in figure 36, and which middle branch, far narrower than its side branches, projects through its rear edge at the same time bending upwards into a support 106 to which the micro-breaker 102 is in fact fixed, such support 106 being provided with a new extension defining a strip 107 to which is fixed one of the ends of a spring 108 relating the support 101 to the arm 109 that is integral with the balance 99, and that in fact acts on the micro-breaker through the latter's rod 110.

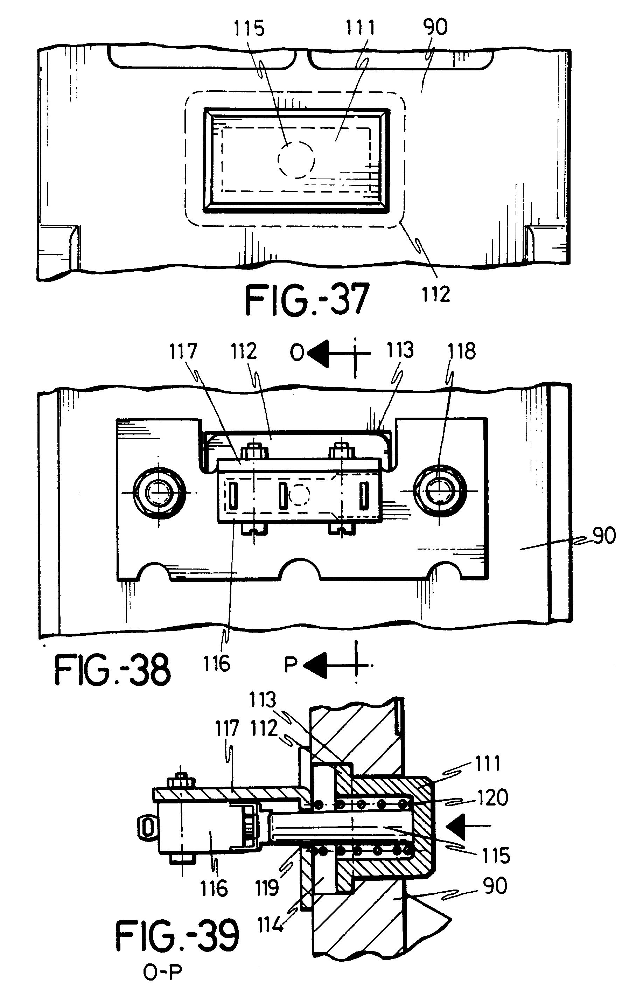

The re-call push-button 111, shown in detail in figures 37 to 39 is provided below this, on this same plate of module 90. More specifically, the said push-button 111 is hollow and open at the back, with a perimetral wing 112 acting a holding abutment on the likewise perimetral stepping 113 of the opening 114 provided for such purpose in plate of module 90 of this module for hanging the handset, at the same time as the said push-button 111 is provided with an axial rod 115 through which it acts on a micro-breaker 116 being integral with a support 117, having an angular shape and being at the same time screwed to threaded rods 118 projecting from the rear surface of the plate of module 90, on either side of the opening or opening 114. Moreover, and as specifically shown in figure 39, this support 117 blocks most of the internal mouth of the opening 114 and has hole 119 for the passage and guidance of rod 115, acting at the same time as support base for the spring 120 that tends to drive the push-button 111 outwards, towards the limiting position of figure 39 given by the wing 112 and the stepping 113.

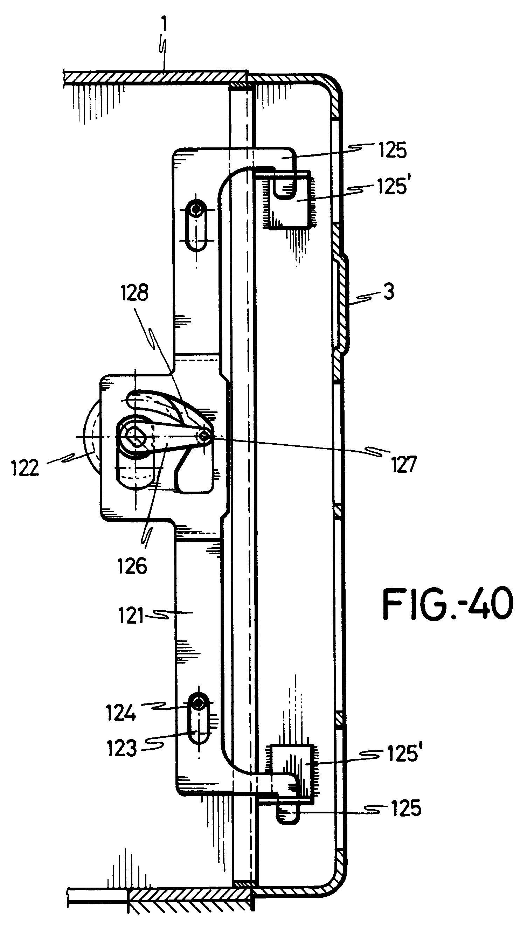

The door 3, duly hinged to body 1, is, as shown in figure 40, provided with a safety bolt 121, that may be operated through a locking mechanism 122, accessible through one of the side walls of the body, as shown in figure 1, such bolt 121 being double and comprising a slide, provided with wide holes 123 for guidance thereof on pivots 124 operatively provided on the side wall corresponding to the top body 1 and the ends of which project into respective bolts as such 125, that may close on holes in angular sheet billets 125′, duly integral with the door 3, the bolts being moved with the help of a rod 126 related to the locking mechanism and its free end provided with a block sheave 127 that runs on a wide hole 128 of the middle area of the displaceable bolt 121.

Attention should in this sense be directed to the fact that this locking mechanism may be provided with complementary blocking means controlled from the telephone exchange to which the telephone is connected, so that opening cannot even be effected by the actual company staff, without previous authorization and at the same time from the actual exchange.

With reference now to the cable 98 relating the handset 16 to the set, such cable 98, duly shielded, is joined to the top body 1 of the set, specifically to one of its side walls, with the assistance of a hinged mechanism allowing the outlet direction of the cable to be varied within given limits.

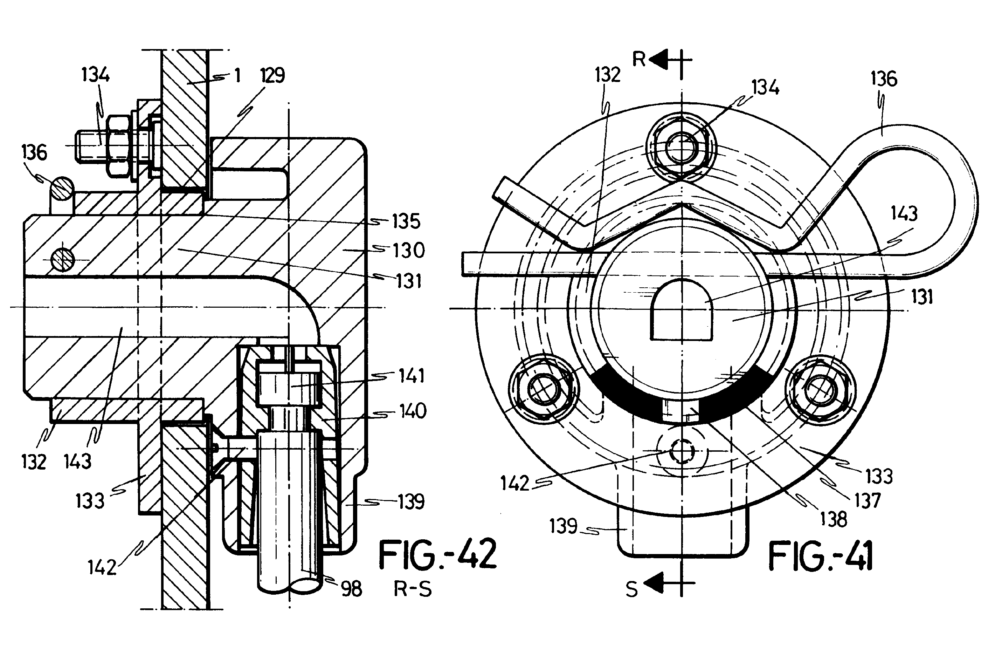

More specifically and in this sense, the side wall of body 1 has a broad circular opening 129, and in this area a part 130 adapts to the outside of body 1, also being very robust and made with the same metal material as the other external telephone elements, such part being provided with a cylindrical and hollow neck 131, through which it penetrates the body through opening 129, such neck 131 being in turn coaxially coupled within a bushing 132 inside the body 1 and provided with a perimetral expansion 133 through which it rests on the internal surface of the said body 1, framing the opening 129 and through which it is fixed to this latter using threaded bolts 134, as in previous cases. Complementarily, the neck 131 of the part 130 is provided with a perimetral stepping 135 limiting axial coupling of bushing 132 in this part and consequently preventing the periphery of the part 130 and the perimetral expansion 133 of the internal part from pressing against the wall of body 1, which would render rotation of the repeatedly mentioned part 130 impossible, it being moreover axially fixed to the bushing 132 with the assistance of a pressure bolt 136. The bushing 132 is provided with a projecting stepping, blackened in figure 41 so that it may be seen at first glance, acting as a tilt limiting abutment for the part 130, tilting of approximately 90° limited by the ends of the said bolt 136.

Complementarily, as shown in figure 42, the part 130 is provided with a second hollow cylindrical neck 139 perpendicular to 131, that is to say, radially arranged, inside which there is a bushing 140 for the corresponding end 141 of the shielding of cable 98, which clamp is in turn fixed with a set bolt 142, continuity being established between the hollow inside of the said bushing 140 and the hollow inside 143 of the neck 131 that enters the body 1.

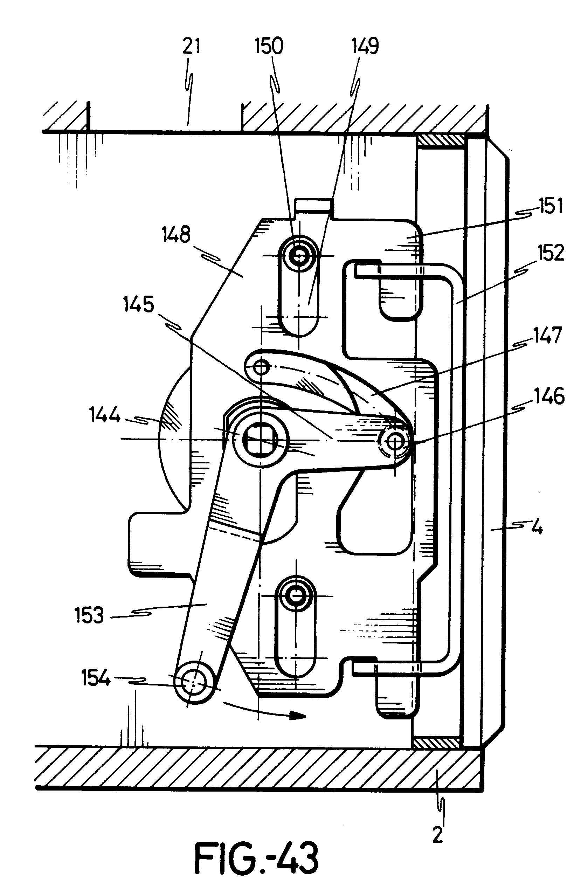

With reference now to the internal body 2, it has a closure mechanism similar to the top body 1, that is to say, a side locking mechanism 144 that, through a rod 145 ends in a block sheave 146 acting inside the wide hole 147 corresponding to a sliding plate 148, provided with wide holes 149 to be guided with the assistance of pivots 150 being integral with the corresponding side wall of body 2, such plate 148 being provided with bent extensions 151 that form the bolts as such, acting on holes in side branches of a "U"-shaped element 152, duly integral with the internal surface of door 4. In this case and as a complement to the structure described, the initial part of the said lock 144 projects into an arm 153 ending in a block sheave 154 that acts on the door 4 when it is opened, as shown by the arrow of figure 43, helping to start opening the said door, this being extremely interesting since the said door 4, as clearly shown in figure 1, has no handle and is moreover mostly inlaid in the mouth of the body, as is in turn show in figure 43, its weight being on the other hand considerable, given the high shielding level foreseen for this lower body 2. It is in this sense necessary to emphasize that this locking mechanism may be provided with complementary blocking means controlled from the telephone exchange to which the telephone is connected, so that opening thereof cannot even be effected by the company staff without prior authorization and at the same time from the said exchange.

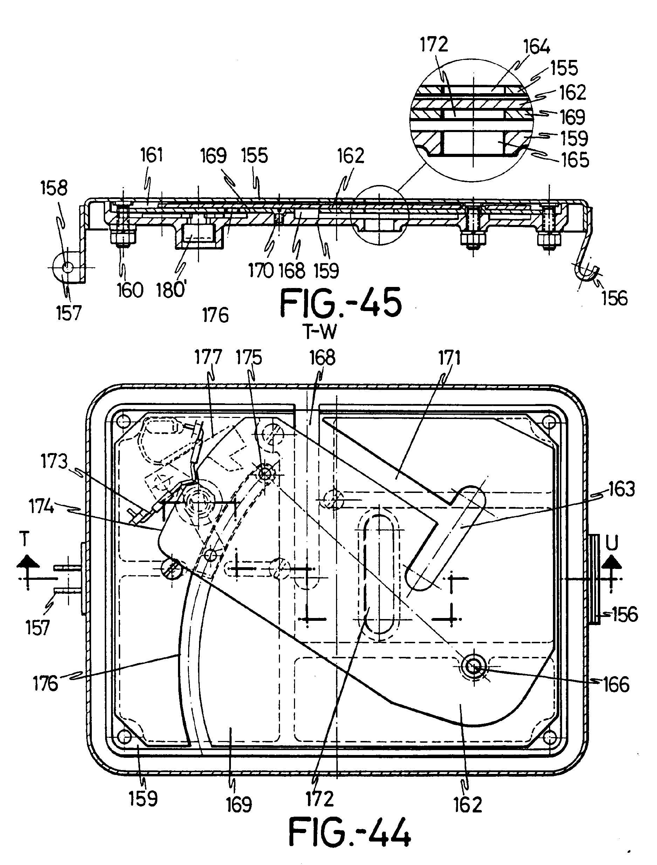

Inside body 2 and acting as a real coin-collecting element is a moneybox provided with a sealable lid 155, for which purpose it is provided with a connection strip 156 on one of its edges and with lugs 157 on the other, with bores 158 for passage of actual seal. The inside of this lid 155 will be provided with a complementary wall 159 forming a sort of pan of scarce depth, that adapts to the internal surface of the former and is fixed to the same with the assistance of screws 160 to define a flat chamber 161 between the two walls for a tilting plate 162 provided with a hole 163 for the coins to go into the moneybox, that may optionally face other similar holes 164 and 165 respectively provided on the external wall 155 and on the internal wall 159 of the lid and that are clearly shown in the enlarged detail of figure 45.

More specifically, as shown in figure 44, the plate 162 tilts on shaft 166 and its tilting is essentially assisted by a pivot 167, projecting from the ceiling or top wall of the body 2 and that simultaneously plays in a front-rear slot 168 of an auxiliary plate 169 likewise established within the flat chamber 161 duly fixed by means of screws 170, and a transversal slot 171 that the tilting plate 162 is provided with, it being obvious that the auxiliary and fixed plate 169 will in turn be provided with another hole 172 for passage of the coins, operatively facing the holes 164 and 165 of the external and internal walls of the lid and that are in due time also faced by the hole 163 of the tilting part.

This structure is assisted by a band iron 173 that acts on the edge 174 of the tilting plate 162 opposite its connection shaft 166, which band 173 stabilizes the said part, acting as a sort of "brake" therefor, and furthermore the lower surface of the tilting plate is provided with a pivot 175 playing in an arched slot 176 of the auxiliary plate 169 and that is provided with a pawl 177, tiltingly assembled on a shaft 178 and in turn related to a cam 179 that is also assembled on a rotation shaft 180, capped by a driving head 180′, accessible from inside the lid, as shown in figure 45, which pawl 177 is provided with an angular gap 181 where, at a given time, the said pivot 175 of the tilting plate 162 is blocked as shown hereinafter.

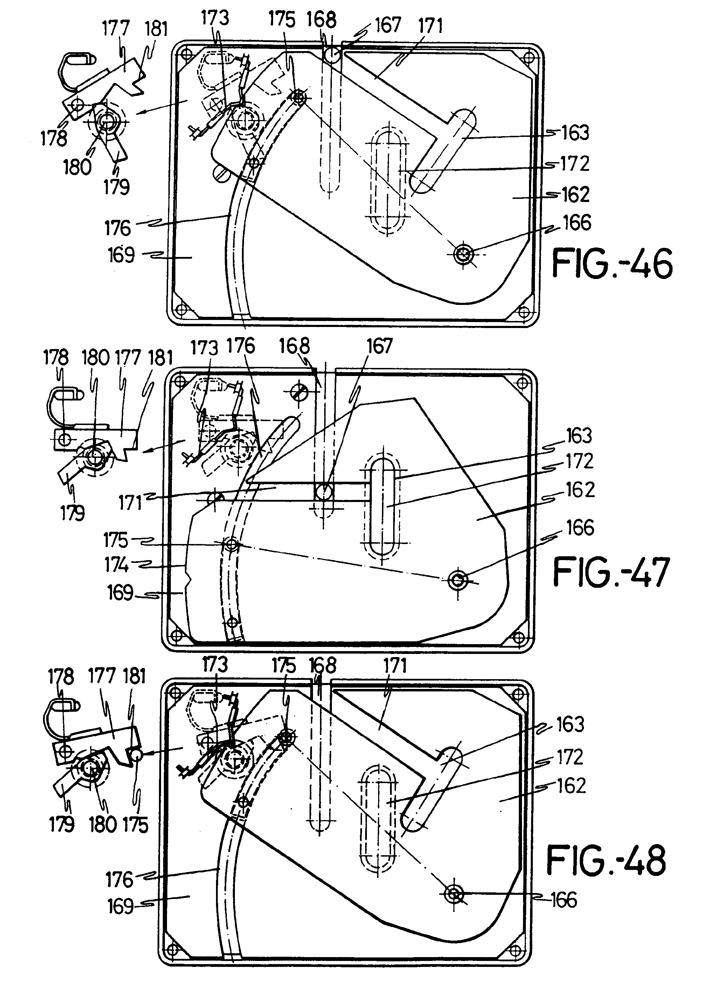

In accordance with this strucutre and as shown in figure 46, when the moneybox is put into the body 2, the tilting plate 162 takes up a position where the mouth of its slot 171 coincides with the mouth of the slot 168 of the auxiliary plate 169. In this position, pivot 167 of the body 2 ceiling is placed over the two mouths when the moneybox starts to be introduced. As the moneybox enters the body 2, the pivot 167 runs along the slot 168 dragging plate 162 with it, and causing it to tilt gradually towards the limiting position shown in figure 47 and corresponding to the total penetration of the moneybox inside the chest, at which time the pawl and the cam take up the position shown in the detail of figure 47, in which position the hole 163 of the tilting part 162 operatively faces the holes 164, 172 and 165 of the top wall of the lid, of the complementary plate 169 and of the lower or internal wall 159 of the said lid, and therefore the coins gradually inserted in the telephone will in due time fall into the said moneybox since, as is obvious, all these openings will be in turn face the holes 21 connecting the top body 1 of the telephone with the lower body 2 (figure 6).

When the moneybox is withdrawn and by merely moving the same towards the outside thereof, the pivot 167 causes the plate 162 to tilt in the opposite direction and through the position taken up by cam 179, as shown in figure 48, in a limiting withdrawal position, the pivot 175 is housed in the gap 181 of the pawl 177, and therefore movement of the tilting plate 162 in the opposite direction is impossible, that is to say, the moneybox cannot be put back into the body 2 again and immediately and a long object cannot be used on the said moneybox to tilt the plate 162 and cause the hole 163 to face the other holes of the lid, in order to extract its coins through the same.

For the moneybox to be put back into the body 2, it must be unsealed, when its contents are to be removed, and when it is open and before being sealed again, the head 180′ of the tilting shaft of the cam 179 must be acted on and the latter forced to take up the position shown in figure 46, where its gap 181 is separated with respect to the path of slot 171 and, consequently, the tilting plate 162 is free to rotate about its shaft 166, only limited by the brake defined by the band iron 173 and, consequently, to allow placing the moneybox in the chest, the pivot 167 of the latter acting on the repeatedly cited tilting plate 162, up to the limiting position where the slots or openings face each other for passage of coins.

A modular telephone is thus achieved, with the different operative modules being easily interchangeable, especially for obtaining telephones with different levels of performance, such telephone moreover affording top guarantees as to inviolability, both regarding criminals and acts of vandalism, and moreover affording top safety guarantees from the standpoint of collection as the moneybox containing the said collection is extracted from the telephone sealed and can be kept thus for any given time, such moneybox being replaced by another empty and also duly sealed moneybox.

## Claims

1. Outdoor modular public telephone, designed to be used with coins and/or credit cards, having an upper body (1) fitted with a front door (3) provided with a number of windows (5, 6, 7, 8, 9, 10) in which to fit and attach a coin insertion mechanism (11), a card insertion mechanism (12), a visual display unit (13), a keyboard (14), a coin return mechanism (15) and a mechanism (16) to rest the handset, characterized in that each such mechanism, the display unit and the keyboard consists of a module that is selectively fitted to the said body, such that specifically the coin or card insertion modules (11,12) and the coin return module (15) can be substituted by suitable covers when not required according to the role the telephone must fulfil, which covers will, as the said modules, be provided at their rear face with threaded screws for attachement to the door of the upper body (1), with the further characteristic, if the use of coins is specifically envisaged, that a lower body (2) also be provided, armoured as the upper body (1) and detachable therefrom, acting as a coin box.

2. Outdoor modular public telephone, in accordance with claim 1, characterized in that the coin insertion module (11) comprises a front plate that, like the other modules, is provided with a rear peripheral stepping (46) to rest on the mouth of the corresponding window (5), such shield being made of a highly resistant material where the relevant coin insertion slot (22) operatively faces a channeling (23) toward a coin selector device (18), in turn located on a store (19) discharging the same, either toward the coin box through channeling (20) or toward the coin return module (15), it moreover having been foreseen that the module (11) be provided with a small window for a push-button (26) having a transversal expansion (27), forming a single piece with the same, housed in a rear recess of the actual plate of module (11), which recess is closed with the assistance of strips (30) of a rear lid (28) fixed in position with screws (29) to the actual shield and provided with a window (32) for the inside of the lid to be reached by an arm (31) of the push-button (26), hingedly connected to a tilting lever (34) through its mid-point on a shaft (36) and provided at its free end with a ram (35) to unblock coins stuck in the coin selector device (18), the shaft being coaxially provided with a spring (37) that tends to hold the lever (34) at rest.

3. Outdoor modular public telephone, in accordance with claim 1, characterised in that the data display module (13) comprises a metal and highly resistant frame, provided with a perimetral and internal stepping housing a flat rubber frame (41) for seating a multilayer glass (40) highly resistant to blows, fixed by a rear and insulating frame (43), with the assistance of threaded bolts (42), to fix the module as a whole, such insulating frame (43) moreover acting as a physical support for the liquid glass screen and the printed circuit assisting the same.

4. Outdoor modular public telephone, in accordance with claim 1, characterized in that the keyboard module (14) is moreover provided with a front shield with rear rods (50) for fixing to the door (3) of the upper body (1), specifically with the assistance of a pan (47) inside the said lid and that simultaneously constitutes the means to fix the said data display module, being moreover provided with other screws (51) to fix a metal frame (52), having a screen of openings (53) numerically and positionally coinciding with the keys, the printed circuit plate corresponding to the said keypad being subsequently fixed to such metal frame, with insertion of an elastic membrane (56) provided with conducting rubber sectors (57) operatively facing the different keys (49), whereas a support of insulating nature is in turn fixed on the front surface of the said frame, having a plurality of housings for corresponding keys, that are coupled in such housings by a bayonet system and the coupling sector of which has a prismatico-polygonal shape, preferably prismatico-quadrangular, such keys being fixed in position as to rotation with the assistance of an auxiliary plate provided with windows numerically, formally and positionally coinciding with the said keys and operatively facing those provided on the shield.

5. Outdoor modular public telephone, in accordance with claims 1 and 4, characterized in that each housing (60) of the electro-insulating support (59) of the keyboard module (14) is basically cylindrical in shape, with two radial and diametrically opposed arms (61), holding a central cylindrical bushing (62) for a rod (63) axially established inside the key (49) cavity and on the front of which rests a spring (64) that in turn axially surrounds the said rod, it having been foreseen that each key and beyond their prismatic actuation sector, be provided with a cylindrical neck (65) clamping the housing bushing, with diametrically opposed openings for the arms that shall hold such bushing, the initial part of such cylindrical neck being at the same time provided with two side and diametrically opposed expansions (66), shaped as a circular trapezium, with a diameter in accordance with that of the support housings (60) and with respective protuberances (67) through which bayonet type locking takes place, at which each support housing is in turn provided with two diametrically opposed slots (68) that, at a rear level, project into respective recesses (69) for locking such protuberances (67).

6. Outdoor modular public telephone, in accordance with claim 1, characterised in that the coin return module (15) forms a highly resistant frame, with threaded rods (80) on its rear surface for fixing to the door (3) of the upper body (1), the rear surface of which module (15) is fixed by screwing a body (77) shaped as a pan open at the top and also open at the front through the wide window (74) forming the shield, at which a tilting door (75) is established, the top edge of which is provided with protuberances (78) comprising cylindrical pivots determining the tilting shaft for the said part, which pivots fit in steppings (79) of the front-top corners of the side walls of body (77), such steppings (79) being closed by the actual wall of the door (3) after the module is positioned, with the particularity that the body (77), the rear part of which is sharply sloped rearwards and upwards, receives in this rear area a complementary plate (81), of lesser slope, and on which front and channeled edge (87) falls the lower end of door (75), when the latter is tilted backwards, towards the limiting opening position, with the further particularity that the internal plate (81) is fixed inside the pan through screws (84) playing in slightly wide holes (85) provided on side wings (83) of such plate (81), granting some mobility to this part.

7. Outdoor modular public telephone, in accordance with claim 1, characterized in that the module (16) for resting the handset, comprising a highly resistant shield and being anatomically shaped to receive the handset, is provided below a recess (95) for fitting the earpiece, with a window that has a balance (99) with side and cylindrical extensions (100), defining rotating pivots fitting in side channelings of the actual plate of module (90) and that are held by an auxiliary "U"-shaped plate support (101), and specifically through the front-top apices (105) of its side branches, through which the said support (101) is fixed to the plate of module (90), with nuts (104) playing in threaded bolts projecting form the plate of module (90) and crossing the said support (101), which and at its middle branch is provided with an upwards support (106), to which the micro-breaker (102) is fixed worked by an arm (109) being integral with the balance (99) and permanently attracted by a spring (108) that relates the same to a strip (107) projecting from the top edge of the actual support (106).

8. Outdoor modular public telephone, in accordance with claims 1 and 7, characterized in that a re-call push-button (111) also located in the plate of module (90) of the module (16) for resting the handset, is hollow, open at the back, provided with a perimetral wing (112) at its mouth and with an axial rod (115) pointing backwards, the said perimetral wing (112) playing on a stepping (113) of the plate of module (90), whilst the axial rod (115) crosses a rear support (117) through a hole (119), to fall on the corresponding micro-breaker (116) being integral with the support (117), which is fixed to the rear surface of the plate of module (90) with the assistance of threaded rods (118) projecting from the latter, positioned on either side of the opening (114) where the push-button (111) plays, at the same time as a spring (120) is provided between the said push-button (111) and the support (117) tends to drive the push-button outwards and is coaxial with the rod (115).

9. Outdoor modular public telephone, in accordance with claim 1, characterized in that the side wall of the upper body (1) is provided at a higher level and at the outlet for the shielded cable (98) with an opening (129) where the neck (131) of a tilting part (130) is coupled, its periphery resting on the external surface of the wall of the upper body (1) and being axially held with the assistance of a bushing (132) that is in turn fixed to the internal surface of the upper body (1) with the assistance of threaded bolts (134) projecting from the latter, the neck (131) and the bushing (132) being externally related through a perimetral stepping (135) in the former and internally through a pressure bolt (136) for axial holding, with the particularity that one of these two elements, specifically bushing (132), has a projecting stepping acting as limiting tilting abutment for the tilting part (130), tilting of approximately 90° being limited by the ends of the said bolt (136), it moreover having been foreseen that the tilting part (130) radially and outwardly projects into another neck (139), within which is established a holding bushing (140) for the end (141) of the cable shielding, which bushing establishes direct connection with the inside cavity (143) of the neck (131) and is fixed to neck (139) with the assistance of a set bolt (142).

10. Outdoor modular public telephone, in accordance with claim 1, characterized in that both the door of the upper body (1) and the door of the lower body (2) may be opened through respective locks (122, 144), provided on the side wall of the respective bodies, which locks act through corresponding rods (126, 145), capped with block sheaves (127, 146), on sliding elements (121, 148) provided for such purpose with wide holes (128, 147) wherein said sheaves play, duly guided through wide holes (123, 149), wherein play pivots (124, 150) and provided with double bolts (125, 151), that in the case of the door (3) of the upper body (1) are locked on holes with angular sheet billets (125′) being integral with the latter, whereas in the case of the door (4) of the lower body (2) are locked on holes of a U-shaped single piece (152), provided on the side branches thereof, it moreover having been foreseen that the initial part of the rod (145) corresponding to the door (4) of the lower body (2) project into an arm (153) capped by a block sheave (154) that falls on the internal surface of the door (4) of the lower body (2) when it is opened causing the same to start opening.

11. Outdoor modular public telephone, in accordance with claim 1, characterized in that the lower body (2) houses a coin box provided with a sealable lid (155), such lid comprising a double wall (155-159), for a chamber (161) to be established therein for location of an auxiliary and fixed plate (169) and a tilting plate (162), provided for such purpose with a shaft (166), with the particularity that the external wall (155) of the lid, the internal wall (159) thereof and the fixed plate (169) are provided with three holes (164, 165, 172) for the passage of coins, permanently facing each other and facing holes (21) for communication between the upper body (1) and the lower body (2), whereas the tilting part is provided with another wide hole (163) that may optionally face the previous ones, with the particularly that the said tilting plate (162) is further provided with a slot (171) for a pivot (167) projecting downwards from the ceiling or top wall of the lower body (2) and that simultaneously plays in a slot (168) of the auxiliary and fixed plate, so that when the coin box is placed inside the lower body (2) the tilting plate (162) automatically tilts for its hole (163) to face the other ones, whereas when it is withdrawn, it tilts in the opposite direction and the said hole (163) is out of phase with the other ones and the plate (162) consequently blocks the access to the coin box slot.

12. Outdoor modular public telephone, in accordance with claim 11, characterized in that the tilting plate (162) receives on its edge (174) opposite its hinged connection shaft (166) the braking effect of a band iron (173) and the lower surface of this end area is provided with a pivot (175) playing in a slot (176) of the auxiliary and fixed plate (169), which pivot will be assisted by a pawl (177) provided in the plane of such pivot, tiltingly assembled on the shaft (178) and permanently attracted by a spring against a cam (179), it having been foreseen that the said pawl be provided with a dihedral gap (181) to fit the pivot (175) of the tilting plate (162) and that blocks the said plate when the coin box is withdrawn from the lower body (2), which the particularly that the rotation shaft (180) of the said cam (179) is internally capped by a driving head (180′) that may be operated from the inside of the lid and through which, manually and with the box open, the pawl (177) is operated for release or unblocking of the pivot (175) of the plate 162.

## Patentansprüche

1. Öffentliches Telefon für die externe Installation, das mit Münzen und/oder Kreditkarten benutzt werden kann und einen oberen Körper (1) mit einer Frontklappe (3) aufweist, die eine Reihe von Fenstern (5, 6, 7, 8, 9, 10) besitzt, in welchen ein Mechanismus für den Einwurf von Münzen (11), ein Mechanismus für die Eingabe von Karten (12), eine Datenanzeige (13), eine Tastatur (14), ein Mechanismus für die Rückgabe von Münzen (15) und ein Mechanismus (16) zur Abstützung des Mikrotelefons montiert und befestigt werden, dadurch gekennzeichnet, daß jeder dieser Mechanismen, die Datenanzeige und die Tastatur aus einem Modul besteht, das nach Wahl an dem genannten Körper angebracht wird, und zwar in der Weise, daß speziell das Modul für den Einwurf von Münzen oder die Eingabe von Karten (11 und 12) sowie das Modul für die Rückgabe von Münzen (15) weggelassen und durch geeignete Abdeckungen ersetzt werden können, wenn sie - in Abhängigkeit von der Rolle, die das Telefon übernehmen soll - nicht benötigt werden, wobei die Deckel, wie auch die genannten Module, auf der Rückseite Gewindeschrauben für ihre Befestigung an der Klappe des oberen Körpers (1) aufweisen; daß für den Fall einer spezifischen Betrachtung der Verwendung von Münzen ein unterer Körper (2) angeordnet wird, der wie der obere Körper (1) gepanzert ist und abgebaut werden kann, welcher als Münzkasse dient.

2. Öffentliches Telefon für die externe Installation, nach Anspruch 1 dadurch gekennzeichnet, daß das Modul für den Einwurf der Münzen (11) eine Frontplatte aufweist, die - wie auch die weiteren Module - eine hintere Umfangswulst (46) Zur Abstützung an der entsprechenden Fensteröffnung (5) besitzt und aus einem äußerst beständigen Material hergestellt wird, bei welchem die Rille für den Einwurf der Münzen (22) betriebsmäßig zu einem Kanal (23) in Richtung eines Münzwählers (18) gerichtet ist, der sich seinerseits in einem Behälter (9) befindet, welche die Münzen entweder über den Kanal (20) in Richtung der Münzkasse, oder in Richtung des Moduls für die Rückgabe von Münzen (15) fallen läßt, wobei außerdem vorgesehen wurde, daß das Modul (11) mit einem kleinen Fenster für eine Drucktaste (26) ausgestattet ist, das eine einstückig damit verbundene Querverbreitung (27) aufweist, die auf einer hinteren Ausnehmung der modularen Platte (11) aufliegt, und diese Ausnehmung mit Hilfe von Streifen (30) einer hinteren Abdeckung (28) geschlossen wird, welche in der geeigneten Stellung über Schrauben (29) an der Panzerung befestigt wird und ein Fenster (32) besitzt, um mit einem Arm (31) der Drucktaste (26), der scharnierartig mit einem Schwenkhebel (34) verbunden ist, welcher über seinen mittleren Punkt um die Achse (36) schwenkt und an seinem freien Ende mit einen Kolben (35) zur Freigabe der eventuell im Münzwähler (18) steckengebliebenen Münzen ausgestattet ist, in den Innenraum des Deckels gelangen zu können, wobei die Achse in koaxialer Stellung eine Feder (37) aufweist, die dazu neigt, den Hebel (34) in der Ruhestellung zu halten.

3. Öffentliches Telefon für die externe Installation, nach Anspruch 1 dadurch gekennzeichnet, daß das Datenanzeigemodul (13) einen äußerst beständigen Metallrahmen mir einer internen Umfangswulst aufweist, der einen flachen Gummirahmen (41) für eine schlagfeste mehrschichtige Glasscheibe (40) aufnimmt und durch einen hinteren Isolierrahmen (43) mit Hilfe von Gewindebolzen (42) befestigt wird, wobei dieser Isolierrahmen (43) außerdem als Halterung für die Flüssigkristallanzeige und den diese betätigenden gedruckte Schaltung dient.

4. Öffentliches Telefon für die externe Installation, nach Anspruch 1 dadurch gekennzeichnet, daß das Tastaturmodul (14) eine frontale Panzerung mit hinteren Stangen (50) für die Befestigung an der Klappe (3) des oberen Körpers (1) und mittels einer Ablage (47) in dieser Abdeckung aufweist, die gleichzeitig die Mittel zur Befestigung des Datenanzeigemoduls zur Verfügung stellt und weitere Schrauben (51) besitzt, mit denen ein Metallrahmen (52) montiert wird, der eine Reihe von Öffnungen (53) zeigt, die in Anzahl und Stellung mit den Tasten übereinstimmen, während die Platte der dieser Tastatur entsprechenden gedruckten Schaltung später am erwähnten Metallrahmen angebracht und eine elastische Membrane (56) mit Leitgummibereichen (57) eingesezt wird, die betriebsmäßig zu den einzelnen Tasten (49) ausgerichtet sind, und eine isolierende Halterung ihrerseits an der Frontfläche des Rahmens angebracht wird, mit einer Reihe von Aufnahmen für die entsprechenden Tasten, die durch ein Bajonettsystem in diese Aufnahmen eingesetzt werden, wobei der Verbindungsbereich eine prismatisch-vieleckige, vorzugsweise eine prismatischviereckige Form hat und die Tasten in der geeigneten Stellung, hinsichtlich der Verdrehung, mit einer Hilfsplatte befestigt werden, welche in Anzahl und Stellung mit den Tasten übereinstimmende Fenster besitzt, die betriebsmäßig zu den in der Panzerung angeordneten gerichtet sind.

5. Öffentliches Telefon für die externe Installation, nach den Ansprüchen 1 und 4 dadurch gekennzeichnet, daß jede Aufnahme (60) der elektrisch isolierenden Halterung (59) des Tastaturmoduls (14) eine praktisch zylindrische Form sowie zwei diametral gegenüberliegende radiale Arme (61) besitzt und eine mittlere zylindrische Buchse (62) für eine Stange hält, die axial innerhalb der Vertiefung der Taste (49) angeordnet ist, auf deren Frontseite sich eine Feder (64) abstützt, die diese Stange ihrerseits axial umgibt, wobei vorgesehen ist, daß jede Taste über den prismatischen Betätigungsbereich hinaus einen zylinderförmigen und die Buchse der Aufnahme haltenden Hals (65) mit diametral gegenüberliegenden Öffnungen für die die Buchse tragenden Arme aufweist, wobei am Anfang des genannten Halses gleichzeitig zwei seitliche, diametral gegenüberliegende Verbreitungen (66) in der Art eines kreisförmigen Trapezes, deren Durchmesser dem der Aufnahmen (6) entspricht, sowie jeweilige Vorsprünge (67) angeordnet werden, über welche der Bajonettverschluß erfolgt, während die einzelnen Aufnahmen ihrerseits zwei diametral gegenüberliegende Nuten (68) besitzen, die sich im hinteren Bereich in die jeweiligen Ausnehmungen (69) erstrecken, um die Vorsprünge (67) zu blockieren.

6. Öffentliches Telefon für die externe Installation, nach Anspruch 1 dadurch gekennzeichnet, daß das Modul für die Rückgabe von Münzen (15) einen sehr festen Rahmen mit an seiner Rückseite angeordneten Gewindestangen (80) zur Befestigung an der Klappe (3) des oberen Körpers (1) bildet, und die hintere Fläche dieses Moduls (15) durch Anschrauben eines Körpers (77) in Form einer im oberen Bereich und im Frontbereich offenen Ablage über ein breites Fenster (74) befestigt wird, wo man eine schwenkbare Klappe (75) montiert, deren oberer Rand Vorsprünge (78) aufweist, die zylinderförmige, die Schwenkachse dieses Teiles bildende Bolzen enthalten, welche den Wülsten (79) der oberen vorderen Ecken der Seitenwände des Körpers (77) angepaßt werden; diese Wülste (79) sind nach dem Einsetzen des Moduls an der Wand der Klappe (3) geschlossen, und zwar mit der Besonderheit, daß der Körper (77), dessen hinterer Bereich stark nach hinten und nach oben geneigt ist, eine zusätzliche Platte (81) geringerer Neigung aufnimmt, auf deren gerilltem vorderen Rand (87) das untere Ende der Klappe (75) abgestützt wird, wenn diese in Richtung der maximalen Öffnungsstellung nach hinten schwenkt und daß die interne Platte (81) in der Ablage über Schrauben (84) befestigt wird, die sich in etwas breiten Öffnungen (85) seitlicher Flügel (83) der genannten Platte (81) bewegen und diesem Teil damit eine gewisse Beweglichkeit verleihen.

7. Öffentliches Telefon für die externe Installation, nach Anspruch 1 dadurch gekennzeichnet, daß sich unter dem Modul (16) zum Anbringen des Mikrotelefons, das eine äußerst beständige Panzerung und eine für die Aufnahme des Mikrotelefons geeignete anatomische Form aufweist, eine Ausnehmung (95) zur Montage des Hörers mit einem Fenster und einem Schwenkhebel (99) mit seitlichen zylindrischen Ausdehnungen (100) befindet, welche drehbare Bolzen bilden, die in seitlichen Kanälen der Platte (90) montiert und durch eine Hilfshalterung in der Art einer U-förmigen Platte (101) gehalten werden, konkret über die oberen Frontscheitel (105) der seitlichen Arme, über deren Halterungen (101) die Befestigung an der Platte (90) mit Hilfe von Muttern (104) erfolgt, die auf die Gewindebolzen gesetzt werden, welche von der Platte (90) abgehen und diese Halterungen (101) kreuzen, während der mittlere Arm eine nach oben gerichtete Halterung (106) aufweist, an der der Mikroschalter (102) befestigt ist, der von einem Arm (109), Bestandteil des Schwenkhebels (99), betätigt und ständig von einer Feder (108) angezogen wird, die ihn mit einem Streifen (107) verbindet, der vom oberen Rand der Halterung (106) abgeht.

8. Öffentliches Telefon für die externe Installation, nach den Ansprüchen 1 und 7 dadurch gekennzeichnet, daß eine an der Platte (90) des Moduls (16) befindliche Drucktaste für die Wiederholung des Anrufs (11) hohl und im hinteren Bereich offen ist und an der Öffnung einen Umfangsflügel (112) sowie eine nach hinten gerichtete axiale Stange (115) aufweist, wobei sich dieser Umfangsflügel (112) auf einer Wulst (113) der Platte (90) bewegt, während die axiale Stange (115) über eine Öffnung (119) eine hintere Halterung (117) durchquert, um sich auf dem entsprechenden Mikroschalter (116) abzustützen, der Bestandteil der Halterung (117) ist und mit Hilfe von Gewindestangen (118), die von der Platte (90) abgehen und an der Rückseite derselben befestigt werden, wobei die Anordnung zu beiden Seiten der Öffnung (114), in der sich die Drucktaste (111) bewegt, gleichzeitig mit der Anordnung einer Feder (120) zwischen der genannten Drucktaste (111) und der Halterung (117) erfolgt, welche dazu neigt, die Drucktaste koaxial mit der Stange (115) nach außen zu drücken.

9. Öffentliches Telefon für die externe Installation, nach Anspruch 1 dadurch gekennzeichnet, daß die Seitenwand des oberen Körpers (1) im oberen Bereich am Ausgang des gepanzerten Kabels (98) eine Öffnung (129) aufweist, an der der Hals (131) eines schwenkbaren Teils (130) angebracht wird, dessen Umfang sich auf der Außenfläche der Wand des oberen Körpers (1) abgestützt und der axial mit Hilfe einer Buchse (132) gehalten wird, die ihrerseits mit Gewindebolzen (134) an der Innenfläche des oberen Körpers (1) befestigt ist, während der Hals (131) und die Buchse (132) extern über eine Umfangswulst (135) des ersten und intern über einen Druckbolzen (136) zur axialen Befestigung verbunden sind, mit der Besonderheit, daß die Buchse (132) eine Abstufung aufweist, die als schwenkbarer Anschlag für das schwenkbare Teils (130) dient, das etwa um 90° ausschlagen kann und durch die Enden des Bolzens (136) begrenzt wird, wobei außerdem vorgesehen ist, daß sich das schwenkbare Teil (130) radial nach außen erstreckt, und zwar innerhalb eines weiteren Halses (139), in dem eine Buchse (140) für das Ende (141) der Kabelpanzerung angeordnet ist, und bei dem die Buchse eine unmittelbare Verbindung zur inneren Vertiefung (134) des Halses (131) herstellt und mit Hilfe eines Paßbolzens (142) am Hals befestigt wird.

10. Öffentliches Telefon für die externe Installation, nach Anspruch 1 dadurch gekennzeichnet, daß sowohl die Klappe des oberen Körpers (1) als auch die Klappe des unteren Körpers (2) über jeweilige Schließvorrichtungen (122, 144) geöffnet werden können, die an den Seitenwänden der jeweiligen Körper angeordnet werden und über entsprechende Stangen (126, 145), an denen Blockierscheiben (127, 146) abgebracht werden, auf Gleitelemente (121, 148) wirken, die zu diesem Zweck mit breiten Öffnungen (128, 147) versehen sind, und dadurch gekennzeichnet, daß sich die Scheiben, ordnungsgemäß in breiten Löchern (123, 149) geführt, bewegen, in denen auch Zapfen (124, 150) gleiten, und daß doppelte Bolzen (125, 151) vorgesehen sind, die im Fall der Klappe (3) des oberen Körpers (1) an Öffnungen mit winkligen Blechplatinen (125′), die mit der Platte verbunden sind, blockieren, während sie im Fall der Klappe (4) des unteren Körpers (2) an Öffnungen eines einzigen Teiles in "U"-Form (152) blockiert werden, das an den seitlichen Armen angeordnet wird, wobei daneben vorgesehen ist, daß der Anfang der der Klappe (4) des unteren Körpers (2) entsprechenden Stange (145) in einen Arm (153) ragt, an den eine Blockierscheibe (154) angeschlossen ist, die beim Öffnen auf die Innenfläche der Klappe (4) des unteren Körpers (2) fällt und bewirkt, daß sich diese Klappe öffnen kann.

11. Öffentliches Telefon für die externe Installation, nach Anspruch 1 dadurch gekennzeichnet, daß der untere Körper (2) eine Münzkasse aufnimmt, die einen versiegelbaren Deckel (155) besitzt, der eine doppelte Wand (155159) enthält, damit eine Kammer (161) für die Anordnung einer festen Hilfsplatte (169) und einer schwenkbaren Platte (162) entsteht, die zu diesem Zweck eine Achse (166) aufweist, und zwar mit der Besonderheit, daß die Außenwand (155) des Deckels, die Innenwand (159) und die feste Platte (169) drei Öffnungen (164, 165, 172) für den Durchgang der Münzen haben, die sich ständig gegenüberliegen und zu den Verbindungsöffnungen (21) zwischen dem oberen Körper (1) und dem unteren Körper (2) gerichtet sind, während der schwenkbare Teil eine weitere breite Öffnung (163) aufweist, die wahlweise zu den vorgenannten ausgerichtet werden kann, woneben die schwenkbare Platte (162) zusätzlich eine Nut (171) für einen Zapfen (167) zeigt, der von der Decke oder oberen Wand des unteren Körpers (2) abgeht und sich gleichzeitig in einer Rille (168) der festen Hilfsplatte so bewegt, daß sich die Platte (162) beim Einsetzen der Münzkasse in den unteren Körper (2) automatisch verschwenkt, wodurch ihre Öffnung (163) den anderen Öffnungen gegenüberliegt, während sie sich beim Herausnehmen der Kasse in die entgegengesetzte Richtung bewegt und damit die Öffnung (163) hinsichtlich der weiteren Öffnungen verschiebt, was dazu führt, daß die Platte (162) den Zugang zur Nut der Münzkasse blockiert.

12. Öffentliches Telefon für die externe Installation, nach Anspruch 11 dadurch gekennzeichnet, daß auf den Rand (174) schwenkbare Platte (162), der ihrer mit Scharnieren befestigten Anschlußachse (166) gegenüberliegt, der Bremseffekt eines Eisenbandes (173) wirkt und die untere Fläche dieses Endbereiches einen Zapfen (175) aufweist, der in der Nut (176) der festen Hilfsplatte (169) gleitet und von einer Klinke (177) unterstützt wird, die in der Ebene dieses Zapfens angeordnet und schwenkbar an der Achse (178) befestigt sowie ständig von einer Feder gegen eine Nocke (178) gezogen wird, wobei vorgesehen ist, daß die Klinke einen zweiflächigen Hohlraum (181) besitzt, an dem der Zapfen (175) der schwenkbaren Platte (162) angebracht wird und welcher die genannte Platte blockiert, wenn die Münzkasse aus dem unteren Körper (2) gezogen wird, und zwar mit der Besonderheit, daß im Innern der Drehachse (180) dieses Nockens (179) ein Betätigungskopf (180′) angebracht wird, der vom Innenbereich des Deckels aus betätigt werden kann, und über welchen die Klinke (177) bei geöffneter Kasse von Hand betätigt wird, um den Zapfen (175) der Platte (162) zu lösen oder befreien.

## Revendications

1. Téléphone public modulaire pour l'extérieur, conçu pour être employé avec des pièces de monnaie et/ou des cartes de crédit, qui a un corps supérieur (1) doté d'une porte frontale (3), qui est pourvue d'une série de fenêtres (5, 6, 7, 8, 9, 10), sur lesquelles on monte et fixe un mécanisme d'introduction de pièces de monnaie (11), un mécanisme d'introduction de cartes de crédit (12), une unité de rerpésentation visuelle (13), un clavier (14), un mécanisme de remboursement de pièces de monnaie (15) et un mécanisme (16) pour appuyer le micro-téléphone, qui est caractérisé par le fait que chacun de ces mécanismes, l'unité de visualisation et le clavier consistent en des modules qui se montent de façon sélective sur le corps cité plus haut, de manière à ce que, concrètement, les modules d'introduction de pièces de monnaie ou d'introduction de cartes de crédit (11, 12) et le module de remboursement de pièces de monnaie (15) puissent être remplacés par des couvercles adéquats, quand on n'en a pas besoin selon le rôle que devra remplir le téléphone, ces couvercles, de même que les modules déjà cités, étant munis sur leur face postérieure de vis filetées pour leur fixation à la porte du corps supérieur (1), et qui est caractérisé en outre par le fait que, si l'on envisage spécifiquement l'emploi de pièces de monnaie, on y disposera aussi un corps inférieur (2), blindé comme le corps supérieur (1), pouvant être séparé de celui-ci et qui sert de caisse pour les pièces de monnaie.

2. Téléphone public modulaire pour l'extérieur, selon la revendication 1, qui est caractérisé par le fait que le module d'introduction de pièces de monnaie (11) comporte une plaque frontale qui, de même que celle des autres modules, est pourvue d'un échelon périphérique postérieur (46) pour s'appuyer sur la bouche de la fenêtre correspondante (5), cette plaque frontale étant fabriquée avec un matériel très résistant, où la rainure pour l'introduction des pièces de monnaie est orientée opérationnellement à un canal (23), dans la direction d'un dispositif sélecteur de pièces de monnaie (18), situé à son tour dans un récipient (9) qui décharge celles-ci, soit vers la caisse de pièces de monnaie à travers le canal (20), soit vers le module de remboursement de pièces de monnaie (15), ayant été prévu, en outre, que le module (11) sera doté d'une petite fenêtre pour un bouton-poussoir (26) qui a un élargissement transversal (27), qui forme une seule pièce avec lui, logée dans un rabaissement postérieur de la plaque modulaire réelle (11), lequel rabaissement se ferme à l'aide de bandes (30) d'un couvercle postérieur (28), fixé en position avec une vis (29) au blindage réel et qui est pourvue d'une fenêtre (32) pour qu'il y ait moyen d'arriver à pénétrer à l'intérieur du couvercle avec un bras (31) du bouton-poussoir (26), connecté au moyen de charnières à un levier basculant (34), à travers son milieu sur un axe (36), lequel levier est muni, à son extrémité libre, d'un piston (35) pour débloquer les pièces de monnaie qui seraient restées coincées dans le dispositif sélecteur de pièces de monnaie (18), l'axe étant doté, en position coaxiale, d'un ressort (37) qui tend à maintenir le levier (34) en repos.

3. Téléphone public modulaire pour l'extérieur, selon la revendication 1, qui est caractérisé par le fait que le module de visualisation de données (13) comporte un cadre métalique et fort résistant, qui est muni d'un échelon périmétral interne qui reçoit un châssis plat en caoutchouc (41) pour recevoir un verre à plusieurs couches (40), très résistant aux coups, fixé par un châssis postérieur et isolant (43) à l'aide de boulons filetés (42, qui fixent le module dans son ensemble, ce châssis isolant (43) agissant, de plus en tant que support physique de l'écran de verre liquide et du circuit imprimé qui active celui-ci.

4. Téléphone public modulaire pour l'extérieur, selon la revendication 1, qui est caractérisé par le fait que le module du clavier (14) est en outre doté d'un blindage frontal, avec des tringles postérieures (50) pour fixer la porte (3) du corps supérieur (1), concrètement à l'aide d'un bac (47) dans ce couvercle, et qui constituent en même temps les moyens pour fixer le module de visualisation de données, étant pourvu en outre d'autres vis (51) pour fixer un châssis métallique (52) qui a une série d'ouvertures (53) qui coïncident par leur nombre et leur position avec les touches, la plaque du circuit imprimé qui correspond à ce clavier étant fixée à l'arrière au châssis métallique cité plus haut, moyennant l'insertion d'une membrane élastique (56) qui est munie de secteurs en caoutchouc conducteur (57) orientés opérationnellement vers les différentes touches (49), tandis qu'un support de nature isolante est fixé, à son tour, à la surface frontale de ce châssis, avec une série de logements pour les touches correspondantes, qui sont accouplées à ces logments moyennant un système de baïonnette et dont le secteur d'accouplement a la forme d'un prisme polygonal, de préférence quadrangulaire, ces touches se trouvant fixées en position, quant à leur rotation, à l'aide d'une plaque auxiliaire qui est pourvue de fenêtres qui coïncident par leur nombre, leur forme et leur position avec ces touches et qui sont orientées opérationnellement vers celles qui sont placées sur le blindage.

5. Téléphone public modulaire pour l'extérieur, selon les revendications 1 et 4, qui est caractérisé par le fait que chaque logement (60) du support isolant électriquement (59) du module du clavier (14) a pratiquement une forme cylindrique, avec deux bras radiaux et diamétralement opposés (61), qui soutiennent une bague cylindrique centrale (62) pour une tringle (63) disposée axialement dans la cavité de la touche (49) et sur la partie frontale de laquelle s'appuie un ressort (64) qui, à son tour, entoure axialement cette tringle, ayant été prévu que chaque touche, au-delà de son secteur prismatique d'actionnement, est dotée d'un col cylindrique (65) qui retient la bague du logement, avec des ouvertures diamétralement opposées pour les bras qui soutiendront cette bague, la partie initiale de ce col cylindrique ayant en même temps deux élargissements latéraux et diamétralement opposés (66), en forme de trapèze circulaire, avec un diamètre correspondant à celui des logements de support (60) et avec des protubérances respectives (67), à travers lesquelles a lieu la fermeture du type baïonnette, dans laquelle chaque logement de support est muni, à son tour, de deux rainures diamétralement opposées (68) qui, au niveau postérieur, se projettent dans les rabaissements respectifs (69) pour bloquer ces protubérances (67).

6. Téléphone public modulaire pour l'extérieur, selon la revendication 1, qui est caractérisé par le fait que le module de remboursement de pièces de monnaie (15) forme un châssis fort résistant, avec des tringles filetées (80) sur sa surface postérieure, pour le fixer à la porte (3) du corps supérieur (1), la surface postérieure de ce module (15) se fixant en y vissant un corps (77) en forme de bac ouvert dans sa partie supérieure et aussi dans sa partie frontale, à travers la large fenêtre (74) que forme le blindage, où se monte une porte basculante (75) dont le bord supérieur est pourvu de protubérances (78) qui comportent des pivots cylindriques qui déterminent l'axe de basculement de cette pièce, ces pivots s'adaptant à des échelons (79) des coins frontaux supérieurs des parois latérales du corps (77), ces échelons (79) étant fermés par la paroi réelle de la porte (3), une fois que le module a été placé, avec cette particularité que le corps (77) dont la partie postérieure est fort inclinée vers l'arrière et vers le haut, reçoit dans cette zone postérieure une plaque complémentaire (81), moins inclinée, sur le bord frontal et cannelé de laquelle (87) s'appuie l'extrémité inférieure de la porte (75), quand celle-ci bascule vers l'arrière, en direction de la position d'ouverture maximale, avec cette particularité supplémentaire que la plaque interne (81) est fixée à l'intérieur du bac au moyen de vis (84), qui se meuvent dans des trous assez larges (85), disposés sur des ailettes latérales (83) de la plaque en question (81), permettant ainsi une certaine mobilité à cette pièce.

7. Téléphone public modulaire pour l'extérieur, selon la revendication 1, qui est caractérisé par le fait que le module (16) pour appuyer le micro-téléphone, qui comporte un blindage fort résistant et a la forme anatomique voulue pour recevoir le micro-téléphone, est doté en dessous d'un rabaissement (95) pour monter l'écouteur, avec une fenêtre qui a un balancier (99) avec des extensions latérales et cylindriques (100) que définissent des pivots tournants, montés sur les canaux latéraux de la plaque modulaire réelle (90) et qui sont soutenus par un support auxiliaire de plaque en forme de "U" (101) et concrètement à travers les sommets frontaux supérieurs (105) de ses bras latéraux, moyennant les supports (101) desquels il est fixé à la plaque modulaire (90) avec des écrous qui se placent sur des boulons filetés qui se projettent depuis la plaque modulaire (90) et croisent ces supports (101), et qui sur le bras du milieu est pourvu d'un support vers le haut (106) auquel est fixé le micro-interrupteur (102) actionné par un bras (109) qui fait partie intégrante du balancier (99) et qui est sans cesse attiré par un ressort (108) qui connecte celui-ci avec une bande (107) qui se projette depuis le bord supérieur du support réel (106).

8. Téléphone public modulaire pour l'extérieur, selon les revendications 1 et 7, qui est caractérisé par le fait qu'un bouton-poussoir pour la répétition d'appel (111), situé aussi sur la plaque modulaire (90) du module (16) pour appuyer le micro-téléphone, se trouve creux, ouvert dans sa partie arrière et est muni d'une ailette périmétrale (112) dans sa bouche, ainsi que d'une tringle axiale (115) qui est orientée vers l'arrière, cette ailette périmétrale (112) se mouvant sur un échelon (113) de la plaque modulaire (90), tandis que la tringle axiale (115) croise un support postérieur (117) à travers un trou (119) pour s'appuyer sur le micro-interrupteur correspondant (116) qui fait partie intégrante du support (117), qui est fixé à la surface postérieure de la plaque modulaire (90) à l'aide de tringles filetées (118) qui se projettent à partir de cette dernière et se placent des deux côtés de l'ouverture (114) où se meut le bouton-poussoir (111), en même temps qu'on dispose un ressort (120) entre ce bouton-poussoir (111) et le support (117) qui tend à pousser le bouton-poussoir vers le dehors, de manière à ce qu'il soit coaxial avec la tringle (115).

9. Téléphone public modulaire pour l'extérieur, selon la revendication 1, qui est caractérisé par le fait que la paroi latérale du corps supérieur (1) est pourvue, au niveau supérieur et à la sortie du câble blindé (98), d'une ouverture (129) à laquelle est accouplé le col (131) d'une partie basculante (130), sa périphérie s'appuyant sur la surface extérieure de la paroi du corps supérieur (1) et étant soutenue axialement à l'aide d'une bague (132) qui est fixée, à son tour, à la surface intérieure du corps supérieur (1) à l'aide de boulons filetés (134) qui se projettent à partir de ce dernier, le col (131) et la bague (132) étant connectés extérieurement au moyen d'un échelon périmétral (135), situé sur le premier et intérieurement au moyen d'un boulon à pression (136) pour la fixation axiale, avec la particularité qu'un de ces deux éléments, concrètement la bague (132) a un échelon qui se projette et agit comme butée basculante limitant la partie basculante (130), qui peut tourner d'environ 90^{º}, étant limitée par les extrémités de ce boulon (136) et ayant été prévu, en outre, que la partie basculante (130) se projette radialement et vers le dehors dans un autre col (139), à l'intérieur duquel on dispose une douille d'arrêt (140) de l'extrémité (141) du blindage du câble, laquelle douille établit une connexion directe avec la cavité intérieure (143) du col (131) et est fixée au col (139) à l'aide d'un boulon d'ajustement (142).

10. Téléphone public modulaire pour l'extérieur, selon la revendication 1, qui est caractérisé par le fait qu'aussi bien la porte du corps supérieur (1) que la porte du corps inférieur (2) peuvent s'ouvrir au moyen de leurs fermetures respectives (122, 144), disposées sur la paroi latérale des corps respectifs, fermetures qui agissent au moyen des tringles correspondantes (126, 145), auxquelles sont accouplés des rouets à bloc (127, 146) sur des éléments glissants (121, 148), placés à cet effet avec de larges trous (128, 147), et qui est caractérisé par le fait aue ces rouets se meuvent, dûment guidés à travers de larges trous (123, 149), où se déplacent des pivots (124, 150) et qui sont munis de boulons doubles (125, 151) qui, dans le cas de la porte (3) du corps supérieur (1), se bloquent sur des trous avec des fers plats en tôle angulaire (125′) solidaires de celle-ci, tandis que, dans le cas de la porte (4) du corps inférieur (2) ils se bloquent sur des trous d'une pièce unique en forme de "U" (152), placée sur ses bras latéraux, ayant été prévu, en outre, que la partie initiale de la tringle (145), correspondant à la porte (4) du corps inférieur (2) se projette dans un bras (153) auquel est connecté un rouet de blocs (154) qui tombe sur la surface interne de la porte (4) du corps inférieur (2) quand il s'ouvre, faisant en sorte que cette porte puisse commencer à s'ouvrir.

11. Téléphone public modulaire pour l'extérieur, selon la revendication 1, qui est caractérisé par le fait que le corps inférieur (2) abrite une caisse de pièces de monnaie, qui est pourvue d'un couvercle qui peut être scellé (155), ce couvercle comportant une double paroi (155-159), pour que s'y forme une chambre (161) afin d'y placer une plaque fixe et auxiliaire (169) et une plaque basculante (162), qui est dotée à cet effet d'un axe (166), avec la particularité que la paroi extérieure (155) du couvercle, sa paroi intérieure (159) et la plaque fixe (169) sont pourvues de trois trous (164, 165, 172) pour le passage des pièces de monnaie, qui sont toujours en face les uns des autres et sont orientés vers des trous (21) de communication entre le corps supérieur (1) et le corps inférieur (2), tandis que la partie basculante reçoit un autre trou large (163), qui peut être orienté au choix vers les précédents, avec la particularité que la plaque basculante déjà citée (162) est munie en outre d'une rainure (171) pour un pivot (167) qui se projette vers le bas à partir du toit ou de la paroi supérieure du corps inférieur (2) et qui se meut simultanément dans une rainure (168) d'une plaque auxiliaire et fixe, de manière à ce que, quand la caisse de pièces de monnaie est placée dans le corps inférieur (2), la plaque basculante (162) bascule automatiquement, de façon à ce que son trou (163) se trouve en face des autres, tandis que, quand elle est retirée, elle bascule dans la direction opposée, le trou en question (163) restant décentré par rapport aux autres et la plaque (162) bloquant par conséquent l'accès à la rainure de la caisse de pièces de monnaie.

12. Téléphone public modulaire pour l'extérieur, selon la revendication 1, qui est caractérisé par le fait que la plaque basculante (162) reçoit sur son bord (174), opposé à son axe de connexion munie de charnières (166) l'effet du frein d'un feuillard en fer (173) et par le fait que la surface inférieure de cette zone d'extrémité est dotée d'un pivot (175) qui se meut dans une rainure (176) de la plaque auxiliaire et fixe (169), pivot qui sera assisté par un cliquet d'arrêt ou ergot (177), placé dans le plan de ce pivot et monté de façon basculante sur l'axe (178), attiré sans cesse par un ressort contre un levier (179), ayant été prévu que ce cliquet d'arrêt soit pourvu d'un espace vide en forme de dièdre (181), où s'accouple le pivot (175) de la plaque basculante (162) et qui bloque cette plaque, quand on retire la caisse de pièces de monnaie du corps inférieur (2), avec la particularité que l'axe de rotation (180) de ce levier (179) est doté à l'intérieur d'une tête d'actionnement (180′) qui est connectée avec lui et qui peut être actionnée à partir de l'intérieur du couvercle, au moyen de laquelle, à la main et avec la caisse ouverte, on actionne le cliquet (177) pour relâcher ou débloquer le pivot (175) de la plaque 162.
